(19) **Europäisches Patentamt**
**European Patent Office**
**Office européen des brevets**

(11) **EP 4 697 000 A1**

(12) **EUROPÄISCHE PATENTANMELDUNG**

(43) Veröffentlichungstag:
**18.02.2026  Patentblatt 2026/08**

(21) Anmeldenummer: **25194028.4**

(22) Anmeldetag: **05.08.2025**

(51) Internationale Patentklassifikation (IPC):
**G01M 11/06** *(2006.01)*    **G01J 1/02** *(2006.01)*
**G01J 1/04** *(2006.01)*    **G01J 1/42** *(2006.01)*

(52) Gemeinsame Patentklassifikation (CPC):
**G01J 1/0242; G01J 1/0437; G01J 1/4228;
G01M 11/06;** G01J 2001/4247

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH LA MA MD TN**

(30) Priorität:  **16.08.2024  DE 102024207830
16.08.2024  DE 202024104650 U**

(71) Anmelder: **MAHA Maschinenbau Haldenwang
GmbH & Co. KG
87490 Haldenwang (DE)**

(72) Erfinder: **GEIGLE, Peter
87435 Kempten (DE)**

(74) Vertreter: **MERH-IP Matias Erny Reichl Hoffmann
Patentanwälte PartG mbB
Paul-Heyse-Straße 29
80336 München (DE)**

(54) **MESSVORRICHTUNG, SYSTEM UND VERFAHREN ZUM ERMITTELN EINES VON EINER
EXTERNEN STRAHLUNGSQUELLE AUSGEHENDEN VIERDIMENSIONALEN
ELEKTROMAGNETISCHEN STRAHLUNGSFELDES**

(57)    Die vorliegende Offenbarung betrifft eine automatisierbare und auf eine beliebige elektromagnetische Strahlungsquelle 200, insbesondere jedoch einen Fahrzeugscheinwerfer während einer Scheinwerferprüfung, anzuwendende Messvorrichtung 100, sowie ein System und eine Verfahren, welche es erlauben, durch konsekutives Erfassen von eingeschränkten Lichtbündeln der zu analysierenden Strahlungsquelle 200, das vierdimensionale elektromagnetische Strahlungsfeld der Strahlungsquelle 200 zu rekonstruieren und somit einen effizienten, kostengünstigen und überaus präzisen Messmechanismus zur Ermittlung etwaiger Strahlungsmusterabweichungen bereitzustellen.

Fig. 1

# EP 4 697 000 A1

**Beschreibung**

Die vorliegende Offenbarung betrifft eine automatisierbare und auf eine beliebige elektromagnetische Strahlungsquelle, insbesondere jedoch einen Fahrzeugscheinwerfer während einer Scheinwerferprüfung, anzuwendende Messvorrichtung, sowie ein System und eine Verfahren, welche es erlauben, durch konsekutives Erfassen von eingeschränkten Lichtbündeln der zu analysierenden Strahlungsquelle, das vierdimensionale elektromagnetische Strahlungsfeld der Strahlungsquelle zu rekonstruieren und somit einen effizienten, kostengünstigen und überaus präzisen Messmechanismus zur Ermittlung etwaiger Strahlungsmusterabweichungen bereitzustellen.

Hintergrund der Offenbarung

Aufgrund zunehmend komplexer werdender Belichtungsmechanismen und der daraus entstehenden Anforderung heutiger Strahlungsquellen ein möglichst präzises und klar definiertes Strahlungsmuster zu generieren, haben sich in vielen Bereichen der Industrie spezifische Vorgaben für die Bereitstellung und Form von durch Strahlungsquellen generierten Strahlungsmustern entwickelt.

So fordert beispielsweise bereits die Straßenverkehrs-Zulassungs-Ordnung (StVZO), dass das Neigungsmuster eines gegebenen KfZ-Scheinwerferlichts, je nach ausgewählter Belichtungsart, einem vorbestimmten Einstellmaß nachkommen muss, um den heutigen Anforderungen zu genügen und somit generell für den Straßenverkehr zugelassen zu werden.

Aus diesem Grund haben sich die Entwicklung und Bereitstellung möglichst präziser Messvorrichtungen zur Ermittlung etwaiger Strahlungsmuster bereits als ein bedeutender Bestandteil für die Industrie, insbesondere für die Fahrzeug- und Informationstechnologie etabliert.

Gattungsgemäß aus dem Stand der Technik bekannte und für die oben genannte Fahrzeugscheinwerferlichtprüfung genutzte Messvorrichtungen, auch Scheinwerfereinstellgeräte (SEG) genannt, umfassen hierbei beispielsweise einen mit einer optischen Einheit bzw. einem Linsensystem eingebundenen Körper, welcher zunächst das gesamte Licht des Scheinwerfers mittels besagten Linsensystem einfängt und daraufhin auf eine ebenfalls in dem Körper befindliche Auswertungswand oder einen auf die optischen Elemente ausgerichteten Sensor bündelt. Die so erfassten Strahlungsprojektionen werden zudem analysiert und anhand der identifizierten Projektionsform zur Rekonstruktion der vom Scheinwerfer ausgehenden Scheinwerferstrahlumrissgeometrie genutzt, wodurch ein Abgleich der Scheinwerferstrahlung mit den vorgegebenen Einstellmaßen ermöglicht wird. Neuere Scheinwerfereinstellgeräte können ferner ebenfalls mit einem plenoptischen Linsensystem versehen sein, welches es erlaubt, neben dem zuvor genannten Gesamtstrahlenumriss, auch Einstrahlwinkel einzelner Objektpunkte des Scheinwerfers unabhängig zu identifizieren.

So wird beispielsweise in der DE 102 013 017 206 A1 ein Scheinwerfereinstellgerät nach dem Stand der Technik gezeigt, welches innerhalb eines Lichtsammelkastens den oben genannten Analysemechanismus ausführt. Eine zusätzlich an dem Lichtsammelkasten angebrachte Ausrichthilfe, bestehend aus zwei fächerförmig ausstrahlenden Lichtquellen, ermöglicht zudem eine genauere Ausrichtung der Vorrichtung in Bezug auf den zu vermessenden Scheinwerfer. Trotz stetiger Weiterentwicklung solcher Messvorrichtung, tritt jedoch in den meisten solcher Anlagen weiterhin das Problem auf, dass, aufgrund der verfeinerten Linsengeometrie, eine genaue Abmessung der Scheinwerferbestrahlung nur durch exaktes Positionieren der Messvorrichtung an einem durch die optischen Elemente bedingten Platzierung und nur bei optimalen Standortbedingungen durchgeführt werden kann, sodass herkömmliche Messvorrichtungen weiterhin als äußerst fehleranfällig angesehen werden müssen und eine aufwendige und, wie auch in dem oben genannten Dokument DE 102 013 017 206 A1 gezeigt, insbesondere langwierige Kalibrierung bedingen. Darüber hinaus ist es in vielen Fällen weiterhin nicht möglich, eine exakte Aussage über die genaue vierdimensionale Strahlenverteilung des durch den Scheinwerfer bzw. die Strahlungsquelle generierten Strahlungsfeldes zu erhalten, da im Allgemeinen das gesamte Scheinwerferlicht zeitgleich aufgenommen wird und somit etwaige Strahlungswinkelinformationen durch das Vermischen verschiedener Scheinwerferstrahlen an dem Sensor verloren gehen.

Insofern ist es eine Aufgabe der vorliegenden Offenbarung eine optimierte Messvorrichtung zur Identifizierung eines bestehenden Strahlungsfeldes eines Fahrzeugscheinwerfers, jedoch auch einer jeden allgemeinen elektromagnetischen Strahlungsquelle, bereitzustellen, mit der eine einfachere, präzisere und insbesondere für Fehler (weniger) anfällige Vermessung ermöglicht wird. Zudem ist es eine Aufgabe, einen derartigen Messmechanismus bereitzustellen, dass nicht nur äußere Umrisse eines etwaigen Strahlungsfeldes erkennbar gemacht werden können, sondern vorzugsweise auch der von jedem Objektpunkt einer zu analysierenden Strahlungsquelle ausgehende Strahlenvektor, d.h. die von einem Objektpunkt ausgehende Strahlungsrichtung, explizit erfasst werden kann, sodass eine präzise und zugleich vollumfängliche Vermessung des entsprechenden Strahlungsfeldes in vier Dimensionen ermöglicht wird.

**Detaillierte Beschreibung der Offenbarung**

Zur Lösung der vorstehend genannten Aufgaben werden eine Messvorrichtung, ein System und ein Verfahren zur Ermittlung eines von einer externen Strahlungsquelle ausgehenden vierdimensionalen elektromagnetischen Strahlungsfeldes gemäß den unabhängigen Ansprüchen vorgeschlagen. Die abhängigen Ansprüche betreffen bevorzugte Ausführungsbeispiele der vorgeschlagenen Offenbarung.

Insbesondere kann die Messvorrichtung der vorliegenden Offenbarung hierzu vorzugsweise zumindest ein Gehäuse mit einem Eingangsabschnitt zur Aufnahme von von einer externen Strahlungsquelle ausgehenden Strahlung in die Messvorrichtung sowie einen in dem Gehäuse positionierten Sensorabschnitt zur Erfassung zumindest eines elektromagnetischen Strahls umfassen. Im Unterschied zu herkömmlichen Messvorrichtungen, welche eine große Anzahl an verschiedenen Geometrien und in diesen eingefügten feinfühligen Linsen und/oder Justierelementen umfassen, bedingt der Minimalaufbau der vorgeschlagenen Messvorrichtung somit lediglich eine einfache und durchaus robuste Konstruktion, wodurch nicht nur Produktionskosten reduziert, sondern auch etwaige Anwendungsfehler effektiv minimiert werden können.

Um zudem eine genaue Ermittlung eines bestehenden und von der Messvorrichtung zu erfassenden Strahlungsfeldes zu ermöglichen, kann der Eingangsabschnitt, in einem besonders bevorzugten Fall, zudem vorzugsweise zumindest ein zunächst allgemein beschriebenes Strahlungslimitierungselement umfassen, welches eingerichtet ist, einen Strahl der von der Strahlungsquelle ausgehenden und in dem Eingangsabschnitt aufgenommenen Strahlung zu erfassen und diesen lediglich in den oben genannten Sensorabschnitt zu projizieren, falls der jeweilige Strahl einem von einer Mehrzahl von zulässigen Strahlungsvektoren eines von der Messvorrichtung vordefinierten und variable zu verändernden Strahlungsvektorsets entspricht, wobei ein beliebiger Strahlungsvektor im bevorzugten Fall durch einen dreidimensionalen Objektpunkt $P_{obj}(x, y, z)$, an welchem der genannte Strahl von der zu analysierenden Strahlungsquelle austritt, und zwei Einstrahlungswinkeln $\omega$ und $\varphi$ definiert sein kann.

Zentraler Bestandteil der vorliegenden Offenbarung kann es somit insbesondere sein, dass, mittels des zuvor genannten Strahlungslimitierungselements und im Vergleich zum bestehenden Stand der Technik, nicht das gesamte Strahlungsfeld zeitgleich innerhalb des bestehenden Sensorabschnitts erfasst bzw. aufgenommen wird, sondern lediglich einzelne, durch ein vordefiniertes Vektorset festgelegte Strahlen dieses Strahlungsfeldes besagten Sensorabschnitt erreichen können, wodurch, im bevorzugten Fall, innerhalb des Sensorabschnitts etwaiger Zusammenfall verschiedener von der Strahlungsquelle ausgehender Strahlen vermieden und jeder von einem Objektpunkt der Strahlungsquelle ausgehender Strahlenverlauf separat detektiert werden kann. Insofern ist es hierdurch, insbesondere durch konsekutives Erfassen der durch das Strahlungslimitierungselement projizierten Strahlen in dem Sensorabschnitt bei unterschiedlichen zugelassenen Strahlungsvektoren bzw. unterschiedlich ausgewählten Strahlungsvektorset, möglich, einen jeden Strahl der bestehenden Strahlungsquelle unabhängig zu detektieren und somit ein überaus präzises und strahlengenaues Bildnis des von der Strahlungsquelle ausgehenden Strahlungsfeldes zu generieren.

Auf diesem Mechanismus basierend, kann die vorgeschlagene Messvorrichtung der vorliegenden Offenbarung oder, genauer, der entsprechende Sensorabschnitt der Messvorrichtung im weiteren Fall entsprechend zumindest ein Sensorelement umfassen, welches vorzugsweise eingerichtet sein kann, die von dem Strahlungslimitierungselement in Abhängigkeit zum momentan genutzten Strahlungsvektorset projizierten Strahlen zu erfassen und, bevorzugt in Abhängigkeit zum genutzten Strahlungsvektorset als digitales Signal zu speichern, wodurch die Messvorrichtung, aufgrund der oben genannten Strahlungsseparation/-limitierung, in der Lage sein kann, die vorzugsweise einzelnen von dem Sensorelement als Erfassungssignal detektierten Strahlen zu identifizieren und so, basierend auf einer Mehrzahl von Sensor-Strahlerfassungen bei unterschiedlich genutzten Strahlungsvektorset, das jeweilige vierdimensionale elektromagnetische Strahlungsfeld effektiv zu berechnen.

Das Sensorelement selbst kann hierfür, je nach Art bzw. Typ der zu erfassenden elektromagnetischen Strahlung (z.B. sichtbares Licht, UV-Strahlung, IR-Strahlung, Radio- oder Mikrowellen) vorzugsweise eine speziell für die entsprechende Strahlungsart definierte Sensorkonstruktion besitzen. So kann das Sensorelement, im Falle einer Erfassung von sichtbarem Licht, wie es etwa bei der zuvor beschriebenen Scheinwerferprüfung benötigt wird, beispielhaft durch einen optischen Sensor, beispielsweise einen CCD-Sensor, einen CMOS-Sensor oder einer einfachen Fotodiode, definiert sein, wohingegen, im Falle eines zu detektierenden IR-Feldes, PIR-Sensoren oder, Im Fall von Mikro- oder Radiowellen, geeignete Antennensysteme genutzt werden können, um die von dem Strahlungslimitierungselement projizierten Strahlen effizient aufzunehmen. Ferner sind auch Punktstrahlsensoren, wie sie etwa in Radar- oder Lidar-Systemen genutzt werden, oder eine Kombination der zuvor genannten Sensorarten als potentielle Sensorelemente möglich, sodass die Form oder Funktionsweise des jeweils zu wählenden Sensorelements lediglich von der Beschaffenheit der zu analysierenden Strahlungsquelle, nicht jedoch von dem Aufbau der vorgeschlagenen Messvorrichtung definiert wird und diese alleinig dadurch bedingt werden, dass zumindest alle durch das jeweilig genutzte Strahlungsvektorset definierten und von dem Strahlungslimitierungselement projizierten Strahlen eindeutig erfasst werden können.

Entsprechend kann das Sensorelement beispielsweise, in einem besonders bevorzugten Ausführungsbeispiel, auch als Flächensensor mit einer vordefinierten Anzahl und Größe von Sensorpixeln bzw. separaten Sensoranteilen (im Falle eines Antennensystems beispielhaft eine vordefinierte Menge an einzeln agierenden Sensorantennen in einem Antennenarray) ausgebildet sein, wobei der Aufbau des jeweiligen Sensorelements bevorzugt derart konstruiert sein kann, dass die einzelnen Sensorpixel jeden der durch ein momentanes Strahlungsvektorset erlaubten und durch das Strahlungslimitierungselement projizierten Strahlen separat, d.h. durch ein oder mehrere speziell einem Signal zugeordneten Sensorpixeln oder separaten Sensoranteilen, erfassen kann (etwa, in einem Fall, in dem das Strahlungslimitierungselement die projizierten Strahlen auf einzelne lokalisierte Standorte innerhalb des Sensorabschnitts projiziert). Hierdurch wird allen voran der Vorteil generiert, dass, abhängig von dem momentan genutzten Strahlungsvektorset, ein durch ein oder mehrerer Sensorpixel erzeugtes Signal bereits eindeutig zu einem zuvor definierten bzw. projizierten Strahlungsvektor zugeordnet werden kann, sodass vorzugsweise bereits durch eine einfache Signalerkennung der durch ein oder mehrere Sensorelemente generierten Signale (d.h. Erfassung des Bestehens eines Pixelsignals und Erfassen der Signalintensität) alle Charakteristika (Intensität + Strahlenvektor) eines von einem Objektpunkt einer Strahlungsquelle ausgehenden Strahls identifiziert werden können.

Alternativ zu dem oben genannten Aufbau kann es jedoch vorzugsweise auch möglich sein, dass genanntes Sensorelement lediglich als Zeilen- oder Punktsensor ausgebildet sein kann, was nicht nur die Produktionskosten der vorgeschlagenen Sensorvorrichtung weiter reduzieren, sondern auch den generellen Aufbau genannter Vorrichtung weiter vereinfachen kann.

Um hierbei zudem dennoch die gleichen bereits beschriebenen Funktionen eines Flächensensors ausüben zu können, und vorzugsweise einem jeden durch das genutzte Strahlungsvektorset erlaubten Strahlungsquellenstrahl nach der Projektion durch das Strahlungslimitierungselement zumindest einem vordefinierten Sensorsignal zuordnen zu können, kann das Sensorelement (auch im Falle eines zu nutzenden Flächensensors) ferner vorzugsweise zumindest unabhängig von dem Strahlungslimitierungselement entlang zumindest einer vordefinierten Fläche, in einem besonders bevorzugten Fall parallel zur Projektionsfläche des Strahlungslimitierungselements, innerhalb des Sensorabschnitts verfahrbar ausgestaltet sein. Eine solche Verfahrbarkeit kann dabei insbesondere ermöglichen, dass sich das genannte Sensorelement, selbst in Form eines Punktsensors, zu einer von dem Strahlungslimitierungselement für einen vordefinierten projizierten Strahl vorgesehenen Projektionsposition innerhalb des Sensorabschnitts bewegen kann, sodass durch ein iteratives Positionieren des Sensorelements an jeder für einen potentiell projizierten Strahl zugeordneten Projektionsposition und dem Erfassen des sich dort befindlichen Strahls, ebenfalls eine geeignete Klassifikation eines jeweiligen Sensorsignals zu einem einzigen Strahl bzw. Strahlungsvektor ermöglicht werden kann.

Die auf die Erfassung der jeweiligen Sensorsignale folgende Signalübertragung sowie die auf besagten Signalen basierende Entnahme der entsprechenden Strahleninformationen zur Ermittlung des vierdimensionalen Strahlungsquellen-Strahlungsfeldes kann dabei im Weiteren vorzugsweise digitalisiert durchgeführt werden.

Insofern kann das zuvor genannte Sensorelement, in einem besonders bevorzugten Ausführungsbeispiel, nach der Erfassung eines beliebigen Sensorsignals, genanntes Sensorsignal vorzugsweise in einen digitalen Messwert, beispielsweise einen durch die jeweilige Strahlstärke definierten Intensitätswert, umwandeln und diesen digitalen Messwert in Abhängigkeit zu für die Identifikation eines mit dem digitalen Messwert assoziierten und durch das Strahlungslimitierungselement projizierten Strahls (beispielsweise die absolute Position des Sensors bzw. Sensorpixels innerhalb der Messvorrichtung, welche das Sensorsignal erzeugt hat, das bei der Erfassung genutzte Strahlungsvektorset und/oder die während der Erfassung genutzte (und vorzugsweise von dem Strahlungsvektorset abhängige) Projektionskonfiguration des Strahlungslimitierungselements) abspeichern. Das Speichern selbst kann hierbei vorteilhafterweise auf einen innerhalb der beanspruchten Messvorrichtung integrierten und mit dem Sensorelement kommunikativ verbundenen Speichereinheit, etwa eine integrierte Festplatte, eine SSD oder einen Speicherchip, erfolgen, sodass alle benötigten Arbeitsschritte (Erfassen der Strahlung, Umwandeln der Signale, Speichern und Identifizieren der Signale), die zur Ermittlung des vierdimensionalen Strahlungsfeldes nötig sind, unabhängig und alleinig durch die beanspruchte Messvorrichtung durchgeführt werden können. In alternativen Ausführungsbeispielen ist es jedoch auch gleichermaßen möglich, dass besagte digitale Messdaten auch an eine externe Speichereinheit, etwa an einen Cloud-gebundenen Serverspeicher oder ein etwaig anderes mit der Messvorrichtung kommunikativ zu verbindenden Endgerät (z.B. ein Laptop oder ein Mobiltelefon) gesendet und dort gespeichert werden können, wodurch sich die beanspruchte Messvorrichtung ebenfalls zur Kopplung mit weiteren Messvorrichtungen oder zur Integration in ein bestehendes Messsystem eignen kann.

In einem weiteren bevorzugten Ausführungsbeispiel kann das Sensorelement zudem vorzugsweise eingerichtet sein, für ein jeweils zu nutzendes Strahlungsvektorset, die jeweiligen von der externen Strahlungsquelle ausgehenden und durch das Strahlungslimitierungselement in den Sensorabschnitt projizierten Strahlen zu erfassen und während der Überführung in einen digitalen Messwerttyp bereits in ein zweidimensionales digitales Intensitätsbild umzuwandeln (und daraufhin abzuspeichern), wobei vorzugsweise jeder der in dem Intensitätsbild eingefügten Einträge (d.h. beispielsweise jeder Pixel) einem von dem Sensorelement erfassten Messwert entsprechen und somit, gemäß dem oben genannten Projektionsmechanismus des Strahlungslimitierungselements, einem bestimmten projizierten Strahl bzw. Strahlungsvektor zugeordnet werden kann. Entsprechend ergibt sich durch diesen Umwandlungsprozess insbesondere der Vorteil, dass jegliche für ein jeweiliges Strahlungsvektorset erhaltene Strahlungsinformation (d.h. das Bestehen eines durch das jeweilige Strahlungsvektorset gültigen/projizierten Strahls und dessen Intensität) bereits vollständig in einem einzigen Datenobjekt (dem genannten Intensitätsbild) abgespeichert und für die weitere Strahlungsfeldidentifikation abgerufen werden können, wodurch ein äußerst effektiver Arbeitsablauf generiert werden kann.

In einem besonders bevorzugten Ausführungsbeispiel kann es zudem auch möglich sein, dass besagtes Intensitätsbild bereits derart angeordnet ist, dass es einem Bild einer durch das Strahlungslimitierungselement projizierten und mit der Position des Sensorelements zusammenfallenden Bildebene des Strahlungslimitierungselements entsprechen kann, sodass genanntes Intensitätsbild insbesondere einer direkten Intensitätsabbildung eines von der Messvorrichtung erfassten und dem Strahlungslimitierungselement in den für das Sensorelement zu detektierenden Strahlen limitierten Objektabschnitts der zu analysierenden Strahlungsquelle gleichkommt. Der Vorteil, der durch diese Anordnung generiert werden kann, ist dabei insbesondere darin zu sehen, dass durch die somit erzielte unmittelbare Wiedergabe eines durch die Messvorrichtung festgelegten Objektabschnitts der externen Strahlungsquelle in den erzeugten Intensitätsbildern bereits ein direkter Bezug der Strahlungsquellengeometrie in den durch das Sensorelement gespeicherten Daten wiedergefunden werden kann, sodass die Berechnung etwaiger Strahlungsvektoren (und damit die generelle Identifikation des bestehenden Strahlungsfeldes der externen Strahlungsquelle), abhängig von der durch das Strahlungslimitierungselement durchgeführten Projektionsart, auf ein Mindestmaß vereinfacht und etwaige Störeffekte, wie etwa chromatische Abberationseffekte, effektiv identifiziert werden können.

So kann zunächst, in einem bevorzugten Ausführungsbeispiel, die Messvorrichtung zur Ermittlung des vierdimensionalen elektromagnetischen Strahlungsfeldes der externen Strahlungsquelle bevorzugt eingerichtet sein, die Mehrzahl an durch das Sensorelement erfassten Messwerten, vorzugsweise als Einträge (Pixelintensitätswerte) eines gespeicherten zweidimensionalen Intensitätsbildes, zu identifizieren und, basierend auf diesen Einträgen, die einzelnen mit diesen Messwerten assoziierten/zugeordneten Strahlungsvektoren zu rekonstruieren, sodass, durch iteratives Durchführen dieses Prozesses für alle erfassten Messwerte/Einträge der Intensitätsbilder, welche bei unterschiedlichen Strahlungsvektorsets generiert wurden, vorzugsweise alle von der externen Strahlungsquelle ausgehenden Strahlen ermittelt und durch Überlagerung in ein genaues Bildnis des von der Strahlungsquelle ausgehenden Strahlungsfeldes überführt werden können.

Die genaue Rekonstruktion der Strahlungsvektoren aus einem mittels Sensorelement erfassten Messwertes kann hingegen vorzugsweise von dem genauen Projektionsprozess und der sich hieraus zwischen Strahlenquelle und Sensorelement ergebenen Strahlengeometrie, sowie den durch das Strahlungslimitierungselement zu erhaltenen Informationen abhängen, sodass in der vorliegenden Offenbarung gleichermaßen unterschiedliche Verfahrenswege zur genauen Ermittlung der jeweiligen Strahlenvektorcharakteristika (Objektpunkt $P_{obj}$(x, y, z) und zwei Einstrahlungswinkel $\omega$ und $\varphi$) verwendet werden können.

So kann es, in einem ersten bevorzugten Ausführungsbeispiel, beispielsweise möglich sein, dass das Strahlungslimitierungselement eingerichtet ist, die Projektion der durch die zulässigen Strahlungsvektoren definierten und von der externen Strahlungsquelle ausgehenden Strahlen aktiv, d.h. durch selektives Filtern und aktives Verändern von Bestandteilen des Strahlungslimitierungselements zur Zuordnung einer vordefinierten Strahlenvektors in einen bestimmten Bereich innerhalb des Sensorabschnitts, zu projizieren. Beispiele für einen solchen Mechanismus sind etwa die Verwendung zumindest eines Spiegelscannersystems als Strahlungslimitierungselements, welches beispielsweise in der Laser- oder LIDAR-Technologie verwendet wird und einen vordefinierten Strahl mittels zumindest zwei orthogonal angeordneten und verfahrbaren Spiegeln an einen für eine Messung und/oder Bildgebung zugeordneten Koordinatenpunkt projizieren können.

Da in einem solchen Fall das Strahlungslimitierungselement einen beliebigen zu projizierenden Strahl, d.h. einen Strahl mit einem ausgewählten Strahlungsvektor, aufgrund eines integrierten Projektionsplans bereits eindeutig einem bestimmten Bereich innerhalb des Sensorabschnitts und somit einem bestimmten Sensoranteil (z.B. einem Sensorpixel oder Pixelareal im Falle eines zu nutzenden Flächensensors) oder einer bestimmten Koordinate innerhalb des Sensorabschnitts zuordnen kann, ist es somit möglich, den durch die gespeicherten Messwerte zu ermittelten und diesen zugeordneten Strahlungsvektor allein aus den zusätzlich mit dem Messwert abgespeicherten Informationen (z.B. die Position des Sensorelements/Sensoranteils, die dem Messwert zugeordnet ist) zu identifizieren, sodass eine Rekonstruktion eines jeweiligen mit einem Messwert verbundenen Strahlungsvektor bereits durch Ermittlung des den Messwert zugeordneten Sensoranteils bzw. genannter Sensorabschnittskoordinate und einem von dem Strahlungslimitierungselement vorgeschriebenen Projektionsplan ermöglicht werden kann.

Insofern kann, in diesem ersten bevorzugten Ausführungsbeispiel, die Messvorrichtung vorzugsweise eingerichtet sein, bei der Nutzung eines aktiven Projektionsmechanismus' des Strahlungslimitierungselements, einen jeweiligen projizierten Strahlungsvektor zumindest basierend auf Informationen bezüglich des Sensoranteils und/oder einer Sensorabschnittskoordinate innerhalb des Sensorabschnitts, welche einem zu analysierenden Messwert zugeordnet ist, und einem von dem Strahlungslimitierungselement vorgeschriebenen Projektionsplan zu berechnen, wodurch ein äußerst präziser und zugleich einfacher Mechanismus zur Identifikation bestehender Strahlungsvektoren generiert werden kann.

In einem zweiten bevorzugten Ausführungsbeispiel kann es hingegen ebenfalls möglich sein, dass die Messvorrichtung auch im Falle einer passiven Projektion des Strahlungslimitierungselements, d.h. im Falle, dass das Strahlungslimitierungselement einen von der externen Strahlungsquelle ausgehenden Strahl ohne aktiv durchzuführenden Projektionsmechanismus (und somit ohne von dem Strahlungslimitierungselement zu erhaltenen Projektionsplan), einen beliebigen Strahlungsvektor aus den durch das Sensorelement erhaltenen und gespeicherten Messwerten rekonstruieren kann.

Zu diesem Zweck kann das Sensorlimitierungselement zunächst vorzugsweise eingerichtet sein, einen jeden von der Strahlungsquelle ausgehenden und momentan durch das genutzte Strahlungsvektorset zulässigen Strahlungsvektor lediglich geradlinig zu projizieren, wodurch besagte Strahlen weder in jeglicher Form abgelenkt oder in ihrer Richtung geändert werden und somit, per Definition, eine geradlinige Strahlengeometrie zwischen ausgehendem Objektpunkt an der Strahlungsquelle und der diesem Strahl zugeordneten Position in dem Sensorabschnitt der Messvorrichtung bilden. Geeignete Beispiele für einen solchen Projektionsmechanismus lassen sich dabei beispielhaft erreichen, indem oben genanntes Strahlungslimitierungselement vorzugsweise als Lochblende (beispielsweise im Falle von IR-, UV- oder sichtbaren zu detektierenden Lichtstrahlen) oder als angepasster Wellen- bzw. Hohlleiter oder Phasengitter (im Falle von Radio- oder Niederfrequenzwellen) ausgebildet wird, wodurch insbesondere eine äußerst einfache und kostensparende Konfiguration des Strahlungslimitierungselements ermöglicht werden kann.

Darüber hinaus bietet diese Projektionsart dabei insbesondere den Vorteil, dass, aufgrund der oben genannten, geradlinigen Strahlengeometrie, sich die genauen Strahlungsvektorcharakteristika eines einem bestimmten Messwert bzw. Intensitätsbildeintrag zugeordneten Strahlungsvektors bereits durch zwei auf diesem Strahlungsvektor liegenden absoluten Koordinatenpunkte berechnen lässt, sodass eine Rekonstruktion eines entsprechenden Strahlungsvektors auch ohne zusätzliche Bezugnahme auf etwaige weitere Eigenschaften des Strahlungslimitierungselements und, in einem besonders bevorzugten Beispiel, lediglich durch bereits aus den gespeicherten Intensitätsbildern entnehmbaren Informationen durchgeführt werden kann.

So kann die Messvorrichtung in dem oben beschriebenen Fall beispielsweise bevorzugt eingerichtet sein, zur Rekonstruktion eines jeden Strahlungsvektors, zumindest die absolute Position des Objektpunktes $P_{obj}(x,y,z)$ an der Strahlungsquelle, aus welchem der entsprechende Strahl entspringt, sowie die absolute Position des Sensorelements bzw. -pixels $P_{sens}(x,y,z)$, an welchem genannter Strahl erfasst wurde, aus den zusammengestellten und gespeicherten Intensitätsbildern zu entnehmen und, basierend auf den Koordinaten dieser beiden absoluten Positionen, jeden entsprechenden Strahlungsvektor zu berechnen.

Vorzugsweise kann die Sensorvorrichtung zu diesem Zweck beispielsweise die Intensitätsbilder, wie zuvor beschrieben, bereits als Intensitätsabbildung des von der Messvorrichtung erfassten Objektbereiches der externen Strahlungsquelle umgeformt haben, sodass ein jeweiliger zu einem Messwert zugeordneter Objektpunkt $P_{obj}(x,y,z)$ bereits als abgebildete Struktur der erfassten Strahlungsquelle aus dem jeweilig generierten Intensitätsbildes entnommen werden kann (d.h. der Entstehungspunkt des entsprechenden Strahlungsvektors eines Messwerts in dem Intensitätsbild kann an der Stelle der Strahlungsquelle identifiziert werden, welcher durch den jeweiligen Messwert-Pixel des Intensitätsbildes abgebildet wird). Darüber hinaus kann die genaue absolute Position des dem Messwert entsprechenden Sensorelements bzw. -pixels $P_{sens}(x,y,z)$ im bevorzugten Fall bereits mit der Erfassung des jeweiligen Messwerts durch das Sensorelement registriert und, im besonders bevorzugten Fall, in Bezug zum jeweiligen dem Messwert in einem Intensitätsbild entsprechenden Intensitätsbildeintrag (d.h. dem jeweiligen Abbildungspixel) innerhalb der Messvorrichtung gespeichert worden sein, sodass sich die entsprechende Information $P_{sens}(x,y,z)$ ebenfalls aus einem dem Messwert zugeordneten Intensitätsbild entnehmen lässt.

Auf diesem Hintergrund basierend kann eine bevorzugte Vorgehensweise zur Rekonstruktion eines projizierten Strahlungsvektors insofern insbesondere vorsehen, dass zunächst, mittels der Messvorrichtung, vorzugsweise mittels eines in der Messvorrichtung integrierten Analyseelements, für jeden in einem Intensitätsbild bestehenden Messwert/Intensitätsbildeintrag, die entsprechenden absoluten Positionen $P_{obj}(x,y,z)$ und $P_{sens}(x,y,z)$ aus dem zugeordneten Intensitätsbild entnommen werden können. Zur genauen Entnahme der absoluten Position des Objektpunktes $P_{obj}(x,y,z)$ kann hierfür insbesondere der genaue Ursprungspunkt des entsprechenden Strahlungsvektors als abgebildete Strahlungsquellenstelle aus dem Intensitätsbild identifiziert und dessen absolute Position daraufhin aus einer externen Abmessungstabelle extrahiert werden, in welcher die genaue Positionen eines jeden auf der Strahlungsquelle liegende Objektpunkt festgehalten sein kann. Eine solche Abmessungstabelle kann dabei vorzugsweise durch vorzeitiges Vermessen der Strahlungsquelle, etwa mit einem LIDAR oder RADAR-System, vor dem eigentlichen Verfahren mittels der vorgeschlagenen Messvorrichtung erzeugt oder aus bereits bestehenden Strahlungsquelleninformationen generiert werden.

Nach Erhalt der oben genannten absoluten Positionen, kann zudem ein jeweiliger einem Messwert zugeordnete Strahlungsvektor $\overrightarrow{V_{strahl}(Pobj(x,y,z),\varphi,\omega)}$ vorzugsweise durch Zwei-Punkt-Vektorberechnung, bzw. Vektorsubtraktion der entsprechenden absoluten Positionsvektoren $\overrightarrow{P_{obj}(x,y,z)}$ und $\overrightarrow{P_{sens}(x,y,z)}$ berechnet werden, sodass sich zur Rekonstruktion des Strahlungsvektors folgende Gleichung (1) ergibt

$$\overrightarrow{V_{strahl}\left(P_{obj}(x,y,z),\varphi,\omega\right)} = \overrightarrow{P_{obj}(x,y,z)} - \overrightarrow{P_{sens}(x,y,z)}. \qquad \text{(Gleichung 1)}$$

Insofern kann durch den hiermit beschriebenen Strahlungsvektorberechnungsmechanismus eine einfache und zugleich präzise Rückrechnung eines Strahlenvektors eines durch das Sensorelement aufgenommenen Strahls ermöglicht werden, wobei entsprechende Berechnungen alleinig auf innerhalb der generierten Intensitätsbilder basierenden Informationen sowie innerhalb oder vor der Vermessung festgelegten Positionseigenschaften des Sensorelements und der erfassten externen Strahlungsquelle basieren können. Entsprechend ergibt sich durch dieses Verfahren somit insbesondere auch der Vorteil, dass eine Vermessung einer Strahlungsquelle mittels der vorgeschlagenen Messvorrichtung an frei auszuwählenden und somit variabel veränderbaren Messpositionen erfolgen kann, sodass, im Gegensatz zu Messsystemen des Stands der Technik, wie etwa den oben genannten Scheinwerfereinstellgeräten, welche eine durch ihre optischen Elemente bedingte feste Positionierung bedingen, eine weitaus variablere und insbesondere fehlertolerantere Messmethodik generiert werden kann.

Darüber hinaus ermöglicht der oben genannte Strahlungsvektoridentifikationsmechanismus eine einfache Anpassung des für die Strahlungsvektorrekonstruktion zu nutzende Gleichung (Gleichung 1), im Falle, dass die vorliegende Messvorrichtung durch weitere, insbesondere die Strahlenerfassung am Eingangsabschnitt der Messvorrichtung begünstigende Elemente beinhalten kann.

So kann, in einem weiteren bevorzugten Ausführungsbeispiel der dargestellten Offenbarung, die vorliegende Messvorrichtung, neben dem am Eingangsabschnitt positionierten Strahlungslimitierungselement und dem am Sensorabschnitt positionierten Sensorelement, beispielsweise zumindest zusätzlich ein am Eingangsabschnitt, vorzugsweise vor dem Strahlungslimitierungselement gelegenes Strahlungsbündelungselement (etwa eine Sammel- oder Fresnellinse oder ein Linsensystem, im Falle von der Strahlungsquelle ausgehenden elektromagnetische Strahlung im sichtbaren, IR- oder UV-Bereich, oder eine Parabolantenne bzw. ein -antennenarray im Falle von aufzunehmenden Radiowellen bzw. Hochfrequenzstrahlung) umfassen, welches bevorzugt eingerichtet sein kann, zumindest den Einfallswinkel der vom Eingangsabschnitt aufgenommenen Strahlung der externen Strahlungsquelle zu variieren und/oder genannte Strahlung zumindest in Richtung des Strahlungslimitierungselements zu fokussieren.

Ein solches Strahlungsbündelungselement kann dabei insbesondere den Vorteil generieren, dass die Anzahl an am Eingangsabschnitt erfassten und zum Strahlungslimitierungselement gelangenden Strahlen der externen Strahlungsquelle innerhalb der vorliegenden Messvorrichtung erhöht, zumindest jedoch die von der Strahlungsquelle ausgehende Strahlungsgeometrie effizient an die Ausrichtung der bestehenden Messvorrichtung bzw. der Ausrichtung der in der Messvorrichtung integrierten Elemente angepasst werden kann, sodass die beanspruchte Messvorrichtung im Weiteren frei von der jeweiligen Strahlungsquelle distanziert und ein weiteres Verschwenken während der Vermessung letzterer (etwa zur Neuausrichtung eines zulässigen Strahlungsvektorsets) vermieden werden kann.

Darüber hinaus lässt sich die in Gleichung (1) dargestellte Rekonstruktionsformel zur Berechnung eines jeweiligen Strahlungsvektor mittels in den generierten Intensitätsbildern enthaltenen Positionsinformationen in diesem Fall äußerst effizient erweitern, insbesondere da die durch das Strahlungsbündelungselement bewirkte Veränderung der Strahlungsvektorgeometrie eines jeden von dem Eingangsabschnitt der Messvorrichtung erfassten Strahles lediglich als dreidimensionale Rotation des entsprechenden Strahles um einen an der Position des Strahlungsbündelungselements definierten Einheitsvektors beschrieben werden kann, sodass, im Vergleich zum vorherig beschriebenen Minimalaufbau der beanspruchten Messvorrichtung, der Strahlungsvektor $\overrightarrow{V_{strahl}(P_{obj}(x,y,z),\varphi,\omega)}$ nunmehr weiterhin durch die Gleichung (2)

$$\overrightarrow{V_{strahl}\big(P_{obj}(x,y,z),\varphi,\omega\big)} \;=\; \mathbf{R}(u,\gamma)^{-1}\overrightarrow{P'_{sens}(x,y,z)} + \overrightarrow{P_b(x,y,z)} \;\text{(Gleichung 2)}$$

berechnet werden kann, wobei $\overrightarrow{P_b(x,y,z)}$ den Positionsvektor der Stelle des Strahlungsbündelungselements, an welcher ein gegebener Strahl gebündelt wird, $\overrightarrow{P'_{sens}(x,y,z)}$ den Positionsvektor des Sensoranteils bzw. -pixels, an welcher der gebündelte Strahl auf das Sensorelement auftrifft und $\mathbf{R}(u,\gamma)^{-1}$ die invertierte Rotationsmatrix an der Stelle $P_b$ definiert, an welchem der ursprünglich von der Strahlungsquelle ausgehende Strahl um einen Einheitsvektor $u$ um einen durch das Strahlungsbündelungselement definierten Rotationswinkel $\gamma$ rotiert wird. Die oben genannte Rotationsmatrix $\mathbf{R}$ kann hierbei im bevorzugten Fall als Rodrigues-Rotationsmatrix, in weiteren bevorzugten Fällen jedoch auch durch andere Rotationsmatrizen beschrieben werden, wobei in diesem Fall die oben genannte Gleichung (2) entsprechend der zu nutzenden Matrixeinträge umzuformen ist.

Insofern ist es möglich, durch zusätzliche Integration des oben genannten Strahlungsbündelungselements, die in die Messvorrichtung gelangende Strahlengeometrie der Strahlungsquelle effizient an die Eigenschaften der vorliegenden Messvorrichtung anzupassen, ohne dabei das eigentliche durch das Strahlungslimitierungselement und das Sensorelement generierte Strahlenrekonstruktionsverfahren im Wesentlichen zu beeinflussen.

Neben dem genannten Strahlungsbündelungselement kann die Messvorrichtung zudem bevorzugt auch weitere bevorzugt in dem entsprechenden Vorrichtungsgehäuse integrierten Elemente umfassen, welche ebenfalls einen förderlichen Effekt auf die letztendliche Erfassung eines von dem Strahlungslimitierungselement projizierten Strahls an dem Sensorelement generieren können.

So kann beispielsweise, in einem weiteren bevorzugten Ausführungsbeispiel, die Messvorrichtung zumindest zusätzlich ein ebenfalls in dem Eingangsabschnitt, vorzugsweise zwischen dem Strahlungslimitierungselement und dem Sensorelement positioniertes Filterelement umfassen, welches insbesondere eingerichtet sein kann, die Intensität der vom Strahlungslimitierungselement projizierten Strahlen einzustellen, vorzugsweise um ein von dem Filterelement vordefiniertes förderliches Maß.

Beispiele für ein solches Filterelement können bevorzugt beispielsweise ein auf die jeweilige Wellenlänge der von der Strahlungsquelle ausgehenden Strahlen angepasster Neutraldichtefilter (etwa im Falle von sichtbaren, IR- oder UV-Licht) oder aber ein oder eine Anzahl an Dämpfungsgliedern (im Falle von Radio oder Hochfrequenzwellen) sein. Darüber kann es ebenfalls möglich sein, dass besagtes Filterelement eine frequenzselektierende Eigenschaft besitzen kann, d.h. als Band-, Lang- oder Kurzpassfilter auftreten und somit nur projizierende Strahlen eines bestimmten Frequenzintervalls an das Sensorelement weiterleiten kann.

Entsprechend kann durch das genannte Filterelement insbesondere der Vorteil generiert werden, dass die durch die projizierten Strahlen auf das Sensorelement auftreffende Energie effizient an die Eigenschaften besagten Sensorelements angepasst werden kann, sodass eine Übersteuerung am Sensorelement effektiv verhindert und etwaige hierdurch entstehende Schäden vermindert werden können. Das Maß der Intensitätsanpassung kann zudem je nach zu nutzendem Sensorelement, im besonders bevorzugten Fall jedoch insbesondere frei selektiv bzw. dynamisch gewählt werden, wodurch die Messvorrichtung bei verschiedensten Strahlungsbedingungen universell einsetzbar bleibt.

Zur zusätzlichen Einstellung der oben genannten Intensitätsmaße kann es zudem ebenfalls möglich sein, dass die Messvorrichtung, vorzugsweise in dem Sensorabschnitt vor dem eigentlichen Sensorelement ein weiteres zeitabhängiges Verschlusselement, etwa einen zeitabhängigen Shutter oder einen Absorber bzw. Reflektor, umfasst, welcher dazu eingerichtet sein kann, die Belichtungszeit, in welcher die von dem Strahlungslimitierungselement auf das Sensorelement projizierten Strahlen fallen können, zu definieren. Hierzu kann genanntes Verschlusselement beispielhaft und bevorzugt mit einem die Strahlen abweisenden oder reflektierenden Material beschichtet bzw. geformt sein, welches nach einer vordefinierten (Belichtungs-)Zeit vor das Sensorelement verfahren werden und somit ebenfalls die Intensität der durch das Sensorelement erfassten Messsignale effektiv anpassen kann.

Folglich ist es, basierend auf den zuvor beschriebenen Elementen, möglich, die durch die beanspruchte Messvorrichtung durchzuführende Vermessung der externen Strahlungsquelle effizient an die Begebenheiten des jeweils zu erfassenden Systems zu optimieren, sodass mittels der beanspruchten Messvorrichtung und des hierdurch ermöglichten Verfahrens des iterativen Einschränkens von auf das Sensorelement zu projizierenden und durch ein jeweiliges Strahlungsvektorset definierten Strahlen, sowie der darauffolgenden Strahlungsrekonstruktion, eine überaus präzise und fehlertolerante Methodik zur Ermittlung eines vierdimensionalen Strahlungsfeldes generiert werden kann. Darüber hinaus bieten die individuell einstellbaren Eigenschaften besagter Elemente zudem den Vorteil, dass etwaige Anpassungen (Intensitätsminderungen, Filterung etc.) zu jeder Zeit, d.h. dynamisch, und somit auch während einer momentan durchzuführenden Strahlungsquellenvermessung realisiert werden können, sodass zuvor genannte Elemente bevorzugt insbesondere auch eingerichtet sein können, ihre jeweiligen Eigenschaften in Falle von vordefinierten Bedingungen, etwa bei Übersteuerungserfassungen oder beim iterativen Wechsel eines zu nutzenden Strahlungsvektorsets zu einem anderen, automatisch anzupassen.

Die generelle Wahl bzw. das iterative Wechseln eines Strahlungsvektorsets während der Vermessung einer Strahlungsquelle sowie die Definierung der zulässigen Strahlungsvektoren innerhalb eines Strahlungsvektorsets zur genauen Ermittlung aller von der Strahlungsquelle ausgehenden elektromagnetischen Strahlen, können dabei in der vorliegenden Offenbarung ferner vorzugsweise wie folgt etabliert sein.

Wie zuvor genannt können die zulässigen Vektoren innerhalb eines Strahlungsvektorsets zunächst derart definiert sein, dass, basierend auf dem Projektionsmechanismus des Strahlungslimitierungselement, das Strahlungslimitierungselement bevorzugt nur einen Strahl, d.h. einen Strahlenvektor, auf eine Stelle bzw. einen oder mehrere Sensoranteile/-pixel des Sensorelements projizieren kann, wodurch, wie zuvor beschrieben, eine genaue Ermittlung eines jeden von dem Sensorelement erfassten Strahls ermöglicht werden kann.

Da insofern die genaue Anzahl von zulässigen Strahlungsvektoren sowohl von der Projektionsart des ausgewählten Strahlungslimitierungselements (siehe oben), als auch von der generellen Menge und Geometrie der von der Messvorrichtung am Eingangsabschnitt erfassten Strahlungsquellenstrahlen, sowie dem strukturellen Aufbau der einzelnen Messvorrichtungselemente, abhängen kann, können entsprechend unterschiedliche Mechanismen zur Definierung der in einem Strahlungsvektorset zulässigen Strahlungsvektoren verwendet werden.

So kann zunächst, in einem bevorzugten Ausführungsbeispiel, zumindest das Strahlungslimitierungselement eingerichtet sein, ein zu nutzendes Strahlungsvektorset automatisiert auszuwählen und, in einem besonders bevorzugten Fall, die in diesem Strahlungsvektorset enthaltenen zulässigen Strahlungsvektoren abhängig von der Projektionsart des Strahlungslimitierungselements zu definieren.

Insofern kann, in einem ersten bevorzugten Ausführungsbeispiel, das Strahlungslimitierungselement beispielsweise erneut als aktives Projektionselement, d.h. unter Verwendung eines aktiven Projektionsmechanismus wie oben genannt, agieren, wodurch die zu projizierenden Strahlen anhand eines vordefinierten Projektionsplans und abhängig von ihrer von der Strahlungsquelle ausgehenden Strahlungsvektorgeometrie zum Sensorabschnitt der vorliegenden Messvorrichtung projiziert werden können. Da in diesem Fall die durch das Strahlungslimitierungselement projizierten Strahlen somit selektiv durch den mittels des Strahlungslimitierungselement durchgeführten Projektionsmechanismus ausgewählt werden können, ist das Strahlungslimitierungselement entsprechend selbst in der Lage, die zu einem Zeitpunkt an dem Sensorelement zu erfassenden zulässigen Strahlungsvektoren zu definieren, sodass in diesem ersten bevorzugten Ausführungsbeispiel das Strahlungslimitierungselement vorzugsweise eingerichtet sein kann, die Strahlungsvektoren der zulässigen und zu projizierenden Strahlen eines Vektorsets, bzw. die Vektorsets selbst, eigenständig festzulegen und zur Erfassung aller von der externen Strahlungsquelle ausgehenden Strahlen selektiv zu iterieren.

Insofern kann, in diesem ersten Ausführungsbeispiel, das zu nutzende Strahlungsvektorset und das Wechseln der einzelnen Strahlungsvektorsets zur Erfassung der an dem Eingangsabschnitt der Messvorrichtung erfassten Strahlungsquellenstrahlen vorzugsweise eigenständig durch das Strahlungslimitierungselement, bevorzugt durch das aktive Limitieren der erfassten Strahlen mittels des im Strahlungslimitierungselement integrierten Projektionsmechanismus erfolgen, wobei die entsprechende Selektion der zulässigen Strahlungsvektoren und die Iteration zwischen den verschiedenen Strahlungsvektorsets vorzugsweise gemäß einem in dem Strahlungslimitierungselement integrierten und zu definierenden Ablaufplan erfolgen kann. Besagter Ablaufplan kann dabei ferner, in einem bevorzugten Beispiel, automatisiert durch die Messvorrichtung erstellt werden, beispielhaft in Abhängigkeit zur Position der jeweiligen Messvorrichtung sowie der Größe und Distanz der zu erfassenden Strahlungsquelle. In weiteren Fällen kann es jedoch ebenfalls möglich sein, dass ein Nutzer der Messvorrichtung manuell etwaige Ablaufpläne erstellen und dem Strahlungslimitierungselement bzw. der Messvorrichtung zur Berechnung des entsprechenden Strahlungsfeldes vorschreiben kann.

Darüber hinaus kann ein ähnlicher Mechanismus zur selektiven Limitierung von auf das Sensorelement zu projizierenden Strahlungsquellenstrahlen vorzugsweise ebenfalls unter Verwendung eines passiven Projektionsmechanismus, vorzugsweise unter Verwendung des linearen Projektionsprozesses, wie zuvor beschrieben, durchgeführt werden.

Hierzu kann, in einem bevorzugten zweiten Ausführungsbeispiel, das Strahlungslimitierungselement insbesondere eingerichtet sein, das zu nutzende Strahlungsvektorset, bzw. die zum Sensorelement zulässigen und zu projizierenden Strahlungsvektoren abhängig von der absoluten Position des Strahlungslimitierungselements und der absoluten Position des Sensorelements bzw. zumindest einem Sensoranteils besagten Sensorelements zu definieren.

Die Grundlage für diesen Mechanismus befindet sich dabei insbesondere in der geometrischen Anordnung des Strahlungslimitierungselements und des Sensorelements in Bezug zu einem jeden Objektpunkt, aus welchem ein Strahl aus der externen Strahlungsquelle austritt: Da, wie genannt, im Falle eines passiven linearen Projektionsprozesses, der von der Strahlungsquelle ausgehende Strahl bis zum Auftreten auf dem Sensorelement unverändert, d.h. ohne weitere Ablenkung oder Ausrichtungskorrektur, auf das Sensorelement projiziert wird, kann, je nach Positionierung des Strahlungslimitierungselements, etwa als Lochblende oder als Wellen- bzw. Hohlleiter, und Einstellung dessen optischer Apertur (bzw. effektive Apertur im Falle von zu nutzenden Wellenleitern), die von der Strahlungsquelle an dem Eingangsabschnitt des Messvorrichtung aufgenommene und auf das Strahlungslimitierungselement auftreffende Strahlenmenge auf einen Satz von Strahlen mit einem vordefinierten Strahlenvektor (d.h. die zulässigen Strahlenvektoren eines jeweiligen Strahlenvektorsets) reduziert werden, sodass, insbesondere abhängig von der absoluten Position des Strahlungslimitierungselements und ihrer eigenen Strahlengeometrie, die so durch das Strahlungslimitierungselement gelangenden Strahlen auf eine individuelle Position innerhalb einer mit dem Sensorelement zusammenfallende Projektionsebene geleitet werden können.

Basierend hierauf ist es somit möglich, dass, abhängig von der Position des Sensorelements bzw. dessen Sensoranteile innerhalb dieser Projektionsfläche, das Sensorelement einen jeden durch das Strahlungslimitierungselement projizierten Strahl (abhängig von der Position des Strahlungslimitierungselements und dessen Apertur) an spezifischen Positionen besagter Projektionsebene erfassen kann, wodurch, mittels geeigneter Positionierung beider Elemente, des Strahlungslimitierungselements und des Sensorelements, eine vordefinierte Menge an dem Sensorelement zu erfassenden Strahlen (d.h. die Strahlen der zulässigen Strahlungsvektoren eines Strahlungsvektorsets) definiert werden können.

Um darüber hinaus die oben genannten Strahlungsvektorsets, basierend auf diesem Zusammenhang, effizient zu Iterieren und somit den zuvor beschriebenen Messmechanismus der vorliegenden Offenbarung zu generieren, kann, in einem bevorzugten Ausführungsbeispiel, ein jeweiliges Strahlungsvektorset entsprechend insbesondere durch Veränderung der absoluten Position des Strahlungslimitierungselements und/oder des Sensorelements in Bezug zur Position der externen Strahlungsquelle variiert werden.

Hierzu kann, in einem besonders bevorzugten Ausführungsbeispiel, beispielsweise die gesamte Messvorrichtung, d.h. das Gehäuse mitsamt der in dem Gehäuse integrierten Elemente, zumindest jedoch das Strahlungslimitierungselement und das Sensorelement verfahrbar ausgestaltet sein, sodass, durch effektives Verfahren besagter Elemente entlang des Strahlungsfeldes der externen Strahlungsquelle, die durch das Strahlungslimitierungselement hindurchgelassenen und auf das Sensorelement auftreffenden Strahlen iterativ verändert und somit, gemäß des zuvor genannten Auswertungsprozesses, das gesamte Strahlungsfeld der externen Strahlungsquelle identifiziert werden kann.

Insofern kann in diesem bevorzugten Beispiel, die Messvorrichtung oder zumindest das Strahlungslimitierungselement und das Sensorelement, zur Änderung eines zu nutzenden Strahlungsvektorsets vorzugsweise eingerichtet sein, zumindest von einer ersten Verfahrposition zu einer zweiten Verfahrposition zu verfahren.

In einem weiteren bevorzugten Ausführungsbeispiel kann es zudem auch möglich sein, dass die Messvorrichtung oder zumindest das Strahlungslimitierungselement und das Sensorelement bereits auch eingerichtet sein können, zur Erfassung aller von der externen Strahlungsquelle ausgehenden Strahlen, insbesondere entlang eines vordefinierten Verfahrweges der Vorrichtung um die externe Strahlungsquelle, bevorzugt jedoch zumindest entlang einer Vertikalebene, welche durch die Strahlung der externen Strahlungsquelle durchdrungen wird, zu verfahren, sodass die Erfassung einer ausreichenden Menge an von der Strahlungsquelle ausgehenden Strahlen gewährleistet werden kann. Der Verfahrweg der Vorrichtung (kurz: Verfahrweg) selbst kann hierbei, analog zum vorgenannten Ablaufplan bei der Nutzung eines aktiven Projektionsverfahrens, im bevorzugten Fall automatisiert und/oder manuell von einem Nutzer der Messvorrichtung definiert werden. Darüber hinaus ist es jedoch auch möglich, dass besagter Verfahrweg einem bereits vordefinierten Muster entsprechen kann.

So ist es beispielhaft bevorzugt möglich, dass zur Erfassung des von der externen Strahlungsquelle ausgehenden Strahlungsfeldes, die Messvorrichtung eingerichtet sein kann, insbesondere entlang eines mäanderförmigen Verfahrweges um die Strahlungsquelle, vorzugsweise innerhalb der oben genannten Vertikalebene, zu verfahren, sodass, im bevorzugten Fall, während des Verfahrens der Messvorrichtung das gesamte Strahlungsfeld von dem in der Messvorrichtung integrierten Sensorelement erfasst werden kann.

In einem weiteren bevorzugten Fall kann es jedoch ebenfalls möglich sein, dass nicht die gesamte Messvorrichtung, sondern lediglich die in dem Gehäuse der Messvorrichtung integrierten Elemente, insbesondere das Strahlungselement und das Sensorelement, entlang des genannten Verfahrweges verfahren werden können, sodass in diesem Fall, aufgrund der fest verbleibenden Gehäuseposition, ein verbesserter Schutz der integrierten Elemente ermöglicht werden kann. In einem weiteren bevorzugten Ausführungsbeispiel kann zudem auch lediglich das Sensorelement beweglich ausgestaltet sein, wohingegen die weiteren Elemente der Messvorrichtung starr positioniert verbleiben.

Der Sensorabschnitt bzw. das in diesem positionierte Sensorelement selbst können ferner eingerichtet sein, während des Verfahrens entlang des vorgenannten Verfahrweges, die durch das Strahlungslimitierungselement projizierten Strahlen durchgehend zu erfassen, wobei der entsprechende Erfassungsmechanismus sequentiell, d.h. beispielsweise nur an bestimmten Positionen oder in bestimmten Zeitabständen während des Verfahrens, oder aber kontinuierlich durchgeführt werden kann.

Das Verfahren des Messvorrichtung bzw. zumindest des Strahlungslimitierungselements und des Sensorelements kann ferner vorzugsweise durch einen mit den genannten Elementen kontaktierbaren Manipulator, im bevorzugten Fall durch eine dreidimensional verfahr- und verschwenkbare Manipulatorvorrichtung realisiert werden. So kann beispielsweise bevorzugt, zur Bewegung der Messvorrichtung entlang des vorgenannten Verfahrweges, die Messvorrichtung mit einem zumindest einen Aktuator umfassenden Roboterarm-System, etwa einem Roboterarm der MAIA-Reihe, kontaktierbar ausgestaltet sein, welche die Messvorrichtung, durch Bewegen des zumindest einen Aktuators, in zumindest zwei Raumrichtungen verfahren und vorzugsweise zwei Raumrichtung verschwenken kann und somit eine effektive Ausrichtung und Erfassung der von der externen Strahlungsquelle ausgehenden Strahlung gewährleisten kann.

Entsprechend der oben genannten Beschreibung wird somit in dieser Anmeldung eine effiziente und überaus präzise Vorrichtung zur Erfassung eines von einer externen Strahlungsquelle ausgehenden vierdimensionalen Strahlungsfeldes beansprucht.

Im weiteren wird zudem, neben der genannten Vorrichtung auch insbesondere ein Vorrichtungssystem zur Ermittlung ebendieses Strahlungsfeldes, umfassend zumindest ein Ausführungsbeispiel der oben genannten Messvorrichtung und zumindest eine externe Strahlungsquelle, wobei die Messvorrichtung in diesem Fall in einer vordefinierten Entfernung von entsprechender Strahlungsquelle beabstandet sein kann, sowie ein, mittels der vorliegenden Messvorrichtung generiertes Strahlungsfeld-Ermittlungsverfahren beansprucht, wobei besagtes Verfahren hierbei zumindest die folgenden Schritte umfassen kann:

- Aufnehmen von Strahlung der externen Strahlungsquelle an dem Eingangsabschnitt der Messvorrichtung;

- Projizieren eines Strahls der von der externen Strahlungsquelle ausgehenden Strahlung, mittels eines Strahlungslimitierungselements in dem Eingangsabschnitt, in den Sensorabschnitt, falls der Strahl einem von einer Mehrzahl von zulässigen Strahlungsvektoren eines vordefinierten Strahlungsvektorsets entspricht, wobei ein Strahlungsvektor durch einen Objektpunkt an der externen Strahlungsquelle und zwei Einstrahlungswinkel definiert ist;

- Erfassen der durch das Strahlungslimitierungselement projizierten Strahlen, mittels eines Sensorelements in dem Sensorabschnitt der Messvorrichtung; und

- Berechnen des vierdimensionalen elektromagnetischen Strahlungsfeldes basierend auf den erfassten Strahlen bei unterschiedlichen Strahlenvektorsets.

Darüber hinaus kann das genannte Verfahren auch, zumindest zusätzlich zu den oben genannten Merkmalen die folgenden Schritte umfassen:

- Umwandeln, mittels des Sensorelements, der erfassten Strahlen in ein digitales zweidimensionales Intensitätsbild;

- Generieren und Speichern einer Mehrzahl von umgewandelten Intensitätsbildern in Abhängigkeit zum genutzten Vektorset; und

- Berechnen des vierdimensionalen Strahlungsfeldes der externen Strahlungsquelle durch Identifizieren der Einträge jedes gespeicherten Intensitätsbildes und Rekonstruieren der ein oder mehreren Strahlungsvektoren, die einem Eintrag entsprechen,

sowie

- Änderung des zu nutzenden Strahlungsvektorsets durch Verfahren der Messvorrichtung oder zumindest dem Strahlungslimitierungselement und dem Sensorelement;
- Generieren der Mehrzahl von Intensitätsbildern durch kontinuierliches oder sequenzielles Erfassen und Umwandeln der projizierten Strahlen, mittels des Sensorelements, während des Verfahrens der Messvorrichtung oder zumindest dem Strahlungslimitierungselement und dem Sensorelement.

**Kurzbeschreibung der Figuren**

**Figur 1:**    zeigt eine skizzenhafte zweidimensionale Ansicht eines von einer Strahlungsquelle ausgehenden elektromagnetischen Felds sowie die Aufnahme eines Strahls dieses Strahlungsfeldes von der Messvorrichtung;

**Figur 2:**    zeigt das System der Figur 1, wobei ferner die Messvorrichtung von einer ersten Position zu einer zweiten Position zur Erfassung eines weiteren Strahls des Strahlungsfeldes verfahren wurde;

**Figur 3:**    zeigt das Strahlensystem der Figur 1, wobei in Relation eine ursprüngliche bei der Scheinwerferprüfung geforderte Detektionslänge mittels Illustration einer Prüfwand in einem definierten Abstand zur Strahlungsquelle gezeigt wird;

**Figur 4A:**    zeigt einen beispielhaften Verlauf der von der Strahlungsquelle ausgehenden und von der Messvorrichtung aufgenommenen Strahlung, dargestellt in einem X-Y-Querschnitt

**Figur 4B:**    zeigt einen beispielhaften Verlauf der von der Strahlungsquelle ausgehenden und von der Messvorrichtung aufgenommenen Strahlung, dargestellt in einem X-Z-Querschnitt

**Figur 5:**    zeigt einen Aufbau der Messvorrichtung als dreidimensionale Schnittskizze gemäß eines ersten Ausführungsbeispiels;

**Figur 6:**    zeigt einen Aufbau der Messvorrichtung als dreidimensionale Schnittskizze gemäß eines zweiten Ausführungsbeispiels;

**Figur 7:**    zeigt eine dreidimensionale Darstellung eines Vorrichtungsverfahrweges der Messvorrichtung vor einer Strahlungsquelle (Fahrzeugscheinwerfer);

**Figur 8:**    zeigt beispielhafte von dem Sensorelement während des horizontalen Verfahrens der Messvorrichtung generierte und invertierte Intensitätsbilder;

**Figur 9:**    zeigt eine Zusammenfassung der erhaltenen Strahlungsvektorinformationen eines erfassten Strahlungsvektorfeldes, dargestellt als zweidimensionale höhenabhängige Winkelverteilung.

## Detaillierte Beschreibung bevorzugter Ausführungsformen

Im Folgenden werden Ausführungsbeispiele der vorliegenden Offenbarung anhand beispielhafter Figuren detailliert beschrieben. Die Merkmale der Ausführungsbeispiele sind im Ganzen oder teilweise kombinierbar und die vorliegende Offenbarung ist nicht auf die beschriebenen Ausführungsbeispiele beschränkt.

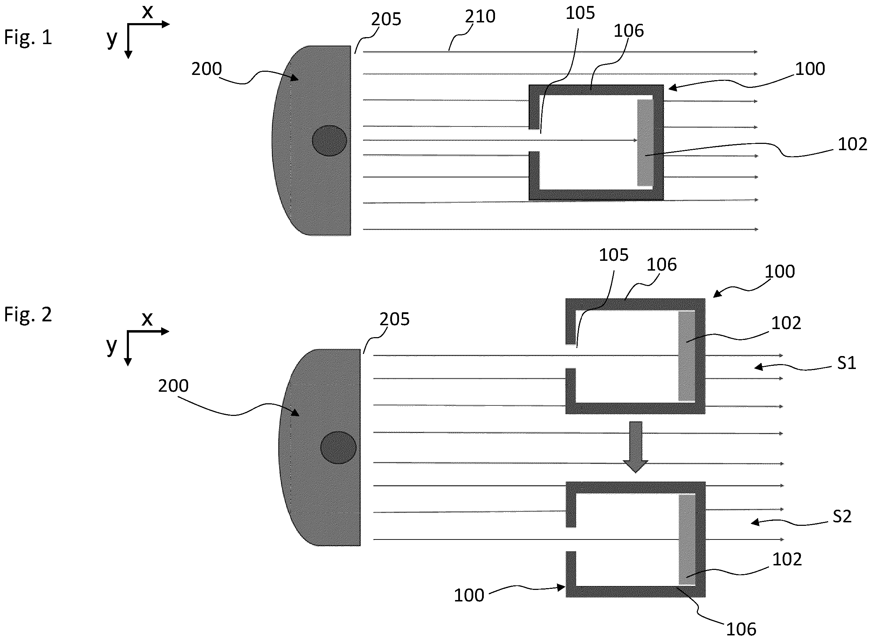

Figur 1 zeigt zur Erläuterung der Funktionsweise der vorliegenden Offenbarung eine vereinfachte Darstellung eines Strahlungserfassungsprozesses durch ein vorteilhaftes Ausführungsbeispiel der offenbarungsgemäßen Messvorrichtung 100 an einem von einer externen Strahlungsquelle 200 ausgehenden Strahlungsfeld. Um hierbei ein Höchstmaß an Verständlichkeit zu generieren, wurde als Anwendungsbeispiel und im Weiteren ein Ermittlungsprozess, wie er beispielhaft für die Ermittlung eines Strahlungsfeld eines Fahrzeugscheinwerfers während einer entsprechenden Fahrzeugprüfung genutzt werden würde, dargestellt, obgleich die vorliegende Offenbarung jedoch weder auf die Erfassung von optischen (d.h. sichtbaren) Strahlen, noch auf die Anwendung für eine solche Fahrzeugprüfung beschränkt ist, sondern, im Allgemeinen, zur Erfassung von jeder Art von elektromagnetischen Strahlungsfeld genutzt werden kann.

Hierbei zeigt das in Fig. 1 dargestellte Anwendungsbeispiel eine externe Strahlungsquelle 200, welche eine Mehrzahl an durch das Strahlungsfeld der Strahlungsquelle definierte elektromagnetischen Strahlen 210 von verschiedenen Objektpunkten der Strahlungsquelle (beispielhaft durch Objektpunkt 205 für den Strahl 210 markiert) aussendet.

Um dieses Strahlungsfeld effektiv zu erfassen und alle zur Darstellung dieses Strahlungsfeldes benötigten Informationen (Intensität + Strahlungsvektor eines jeden in dem Strahlungsfeld befindlichen Strahls) zu erhalten, wird die Messvorrichtung 100, hier dargestellt durch eine beispielhafte Vorrichtung mit einem Gehäuse 106, in welchem zumindest ein Sensorelement 102 (etwa ein CCD-Flächensensor) zum Erfassen der Strahlen sowie ein in diesem Fall als Lochblende zu identifizierendes Strahlungslimitierungselement 105 am Eingangsabschnitt des Gehäuses 106 eingebracht sind, in den Strahlenverlauf dieses Strahlungsfeldes positioniert und daraufhin die durch das Sensorelement 102 registrierten Messwerte zur Identifikation der oben genannten Informationen genutzt.

Dabei ist das dargestellte Strahlungslimitierungselement 105 insbesondere derart ausgebildet, dass es lediglich eine vordefinierte Menge an Strahlen (Strahlen, die die zulässigen Strahlungsvektoren eines momentan zu nutzenden Strahlungsvektorset entsprechen) die auf das Strahlungslimitierungselement 105 treffen auch in den mit dem Sensorelement 102 beinhalteten Sensorabschnitts der Messvorrichtung 100 projiziert, sodass, in einem bevorzugten Fall, jede der vom Strahlungslimitierungselement 105 in den Sensorabschnitt hindurchgelassenen Strahlen separiert auf einen oder mehrere Sensoranteile bzw. -pixel des Sensorelements 102 treffen und somit individuell von dem Sensorelement 102 erfasst werden können. Dies kann im gegebenen Fall insbesondere dadurch realisiert werden, dass die Apertur des dargestellten Lochblenden-Strahlungslimitierungselements 105 auf die oben genannten Eigenschaften eingestellt werden kann, sodass der Vorteil generiert wird, dass vorzugsweise jedem der durch einen bestimmten Sensoranteil bzw. -pixel erfassten Signalwert ein vorbestimmter Strahl samt durch das Strahlungslimitierungselement 105 festgelegten Strahlungsvektor zugeordnet werden kann.

Entsprechend ist es durch die vorliegende Offenbarung möglich, durch selektives Einschränken der durch das Sensorelement 102 zu erfassenden Strahlen mittels des Strahlungslimitierungselements 105 und iteratives Verändern der vom Strahlungslimitierungselement 105 in den Sensorabschnitt der Messvorrichtung 105 eingebrachten Strahlen, potenziell jeden der durch die externe Strahlungsquelle 200 ausgesendeten Strahl (angenommen, es handelt sich um eine kontinuierliche Strahlungsquelle) als gesonderten Messwert innerhalb des Sensorelements 102 zu registrieren, wodurch eine äußerst präzise und insbesondere fehlertolerante Messmethode zur Erfassung eines beliebigen Strahlungsfeldes ermöglicht werden kann.

Fig. 2 zeigt ferner eine vereinfachte Darstellung der Messmethodik der in Fig. 1 dargestellten Messvorrichtung 100, um das oben genannte iterative Verändern der in den Sensorabschnitt zugelassenen Strahlen bzw. Strahlenvektoren zu ermöglichen. Insbesondere kann zu diesem Zweck die Messvorrichtung 100 iterativ zumindest von einer ersten Position (dargestellt durch die Messvorrichtung 100 an Position S1) zu einer zweiten Position (Position S2) verfahren werden, wobei das Sensorelement 102 während des Verfahrens kontinuierlich und/oder sequentiell die durch das Strahlungslimitierungselement 105 in den Sensorabschnitt zugelassenen und beim Verfahren ändernden Strahlen erfassen und somit, durch Umfahren des gesamten von der Messvorrichtung 100 zu analysierenden Strahlungsfeldes, vorzugsweise jeden von besagten Strahlungsfeld ausgesendeten Strahl einzeln detektieren kann. Basierend hierauf ist es somit möglich, in einem optimalen Vermessungsablauf, das jeweilige Strahlungsfeld durch Erfassen jedes einzelnen Strahls exakt zu rekonstruieren, sodass eine präzise Darstellung des Strahlungsfeldes als vier - bzw. im besonderen Fall sogar fünfdimensionales Vektorset ermöglicht wird.

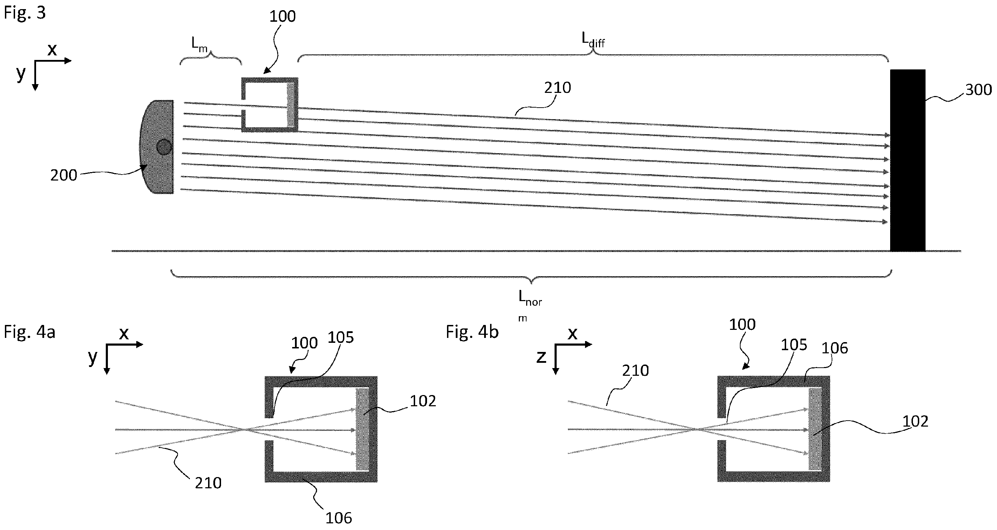

Figur 3 zeigt zudem einen weiteren Vorteil der vorliegenden Offenbarung im Bezug auf die Anwendung der beanspruchten Messvorrichtung in einem bestehenden Fahrzeugscheinwerferprüfungssystem. Da im Allgemeinen nach anzuwendender Fahrzeugprüfungsrichtlinien ein zu prüfender Fahrzeugscheinwerfer mit einem auf 10 Meter definierten Einstellmaß verglichen werden muss, wird in vielen Fällen, insbesondere zur Vermessung von hochgelegenen Scheinwerfern, wie etwa für Bau-Fahrzeuge, für die Ermittlung der Strahlengeometrie und -neigung eines von einem Fahrzeugscheinwerfer 200 ausgehenden Strahlungsfeldes eine in 10 Meter vom Scheinwerfer 200 (Abstand $L_{nor}$ in Fig. 3) beabstandete Prüffläche 300 positioniert und die maximale Neigung der vom Scheinwerfer 200 ausgehenden Strahlen 210 anhand des auf der Prüffläche 300 abgebildeten Lichtmusters berechnet. Da dieses Vorgehen jedoch ein überaus großes und nahezu perfekt austariertes Prüfsystem, welches nicht in jedem Betrieb gegeben ist, bedingt, ist eine Vermessung eines Fahrzeugscheinwerfers mittels Prüffläche 300 in den meisten Fällen nur unter großem Aufwand zu realisieren.

Insofern bietet eine Vermessung des Strahlungsfeldes mittels der vorliegenden Messvorrichtung 100 eine geeignete Alternative zu dem oben genannten Verfahren, insbesondere da die durch die Messvorrichtung 100 generierte Messmechanik nicht auf einen vordefinierten Abstand der Strahlungsquelle 200 zur jeweiligen Messvorrichtung 100 beschränkt ist und somit die für eine Strahlungsfeldvermessung benötigte Distanz zwischen Messvorrichtung 100 und Strahlungsquelle 200 auf einen vorzugsweise selbst auszuwählende Distanz $L_m$ verkleinert werden kann. Entsprechend ergibt sich durch die beanspruchte Offenbarung insbesondere der Vorteil, dass die Länge eines zu nutzenden Erfassungssystems, im Vergleich zu herkömmlichen Prüfwandständen, um eine signifikant großen Betrag $L_{diff}$ verkürzt werden kann.

Figur 4a und 4b zeigen zudem eine vereinfachte Darstellung einer durch das Strahlungslimitierungselement 105 der Figuren 1 und 2 in den Sensorabschnitt der Messvorrichtung 100 projizierten Strahlengeometrie anhand einer entlang einer vertikalen (X-Y) bzw. horizontalen (X-Z) Fläche dargestellten Schnittzeichnung.

Wie zu erkennen ist, gelangen die von der Strahlungsquelle 200 ausgehenden Strahlen 210, abhängig von der Position der Messvorrichtung 100, projiziert, d.h. als gespiegelte Abbildung ihres von der Strahlungsquelle 200 definierten Objektpunktes, zum in dem Gehäuse 106 der Messvorrichtung 100 gelegenen Sensorelement 102, in welchem sie an einem oder mehreren Anteilen (z.B. einzelnen Sensordioden oder -pixel) erfasst und zu einem digitalen Signal, vorzugsweise einem von den Positionen der Sensoranteile abhängigen Intensitätsbild umgewandelt werden. Dabei ist die Apertur des dargestellten Strahlungslimitierungselements 105 insbesondere derart eingestellt, dass, im optimalen Fall, lediglich ein Strahl einer vordefinierten Strahlengeometrie bzw. eines vordefinierten Strahlungsvektors, auf eine oder mehrere der oben genannten Sensoranteile auftreffen kann, sodass vorzugsweise jedem in dem generierten Intensitätsbild aufgenommenen Messwert ein vordefinierter Strahl bzw. Strahlenvektor zugeordnet werden kann.

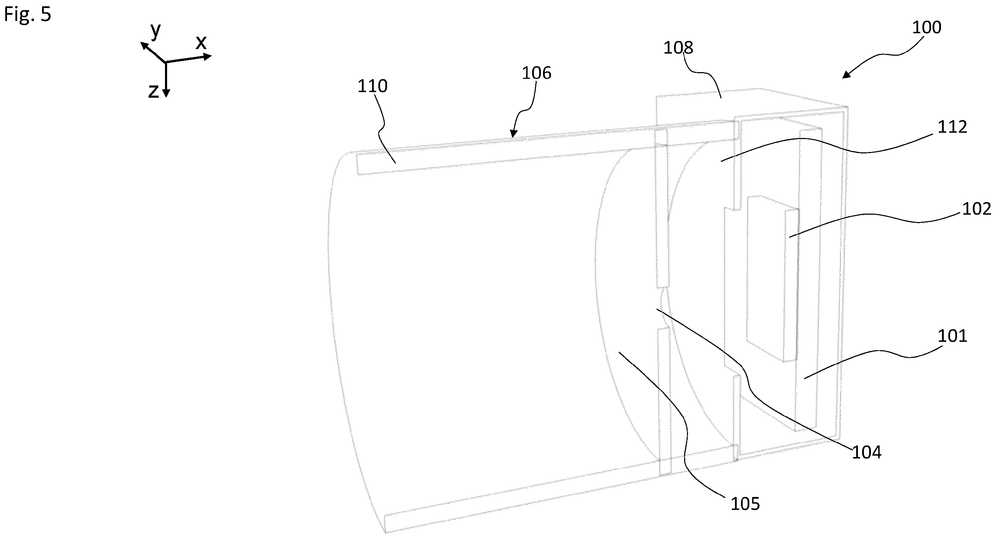

Figur 5 zeigt ferner eine dreidimensionale Detailschnittdarstellung eines Minimalaufbaus der vorliegenden Messvorrichtung 100, wie sie beispielhaft für die Scheinwerferprüfung, wie in Fig. 1 oder 2 gezeigt, eingesetzt werden kann.

Hierbei besitzt die vorgenannte Messvorrichtung 100 insbesondere ein mit einem Eingangsabschnitt 110 und einem Sensorabschnitt 108 versehenes Gehäuse 106, wobei die jeweiligen Abschnitte beispielhaft als zwei mit unterschiedlichen Gehäuse-Geometrien ausgestatten Verkleidungen ausgebildet sind. Innerhalb des Eingangsabschnitts 110 ist zudem in diesem Fall das als Lochblende ausgebildete Strahlungslimitierungselement 105 positioniert, welches mittels einem in der Mitte der Blende eingefügten Spalt 104 die entsprechend in den Eingangsabschnitt 110 gelangenden Strahlen 210 der Strahlungsquelle 200 in den Sensorabschnitt 108 projizieren und somit die zuvor beschriebenen Messmechanik realisieren kann. Das Strahlungslimitierungselement 105 kann dabei bevorzugt eingerichtet sein, die Spaltgröße und somit die zur Projektion benötigte Apertur individuell und insbesondere dynamisch einzustellen, sodass, abhängig von der jeweils von der Strahlungsquelle 200 ausgehenden Strahlenart und -geometrie, eine detaillierte Vermessung zu jeder Zeit gewährleistet werden kann. Darüber hinaus wurde im vorliegenden Fall zudem zwischen dem Strahlungslimitierungselement 105 und dem Sensorabschnitt 108 bzw. dem in dem Sensorabschnitt 108 positionierten Sensorelement 102, ein zusätzliches zweites Strahlungslimitierungselement 112 mit einem an die Größe des Sensorelement 102 angepassten zweiten Spalt eingefügt, durch welchen etwaige durch das erste Strahlungslimitierungselement 105 projizierten, jedoch nicht an das Sensorelement 102 gelangenden Strahlen blockiert und somit etwaige Hintergrundbeleuchtungen des Sensorelements 102 effektiv vermindert werden können.

Das Sensorelement 102 innerhalb des Sensorabschnitts 108 selbst ist ferner im vorliegenden Fall als auf einem zur Projektionsebene des Strahlungslimitierungselements 105 ausgerichteten Sensorblock 101 positioniert und als zweidimensionaler Flächensensor, etwa einem CCD- oder CMOS-Sensor ausgebildet. Darüber hinaus kann besagtes Sensorelement 102 vorzugsweise entlang der durch den Sensorblock 101 generierten Oberfläche verfahrbar ausgestaltet sein, sodass, im gegebenen Fall, die durch das Sensorelement 102 ermöglichte Strahlenaufnahmefläche effektiv vergrößert werden kann.

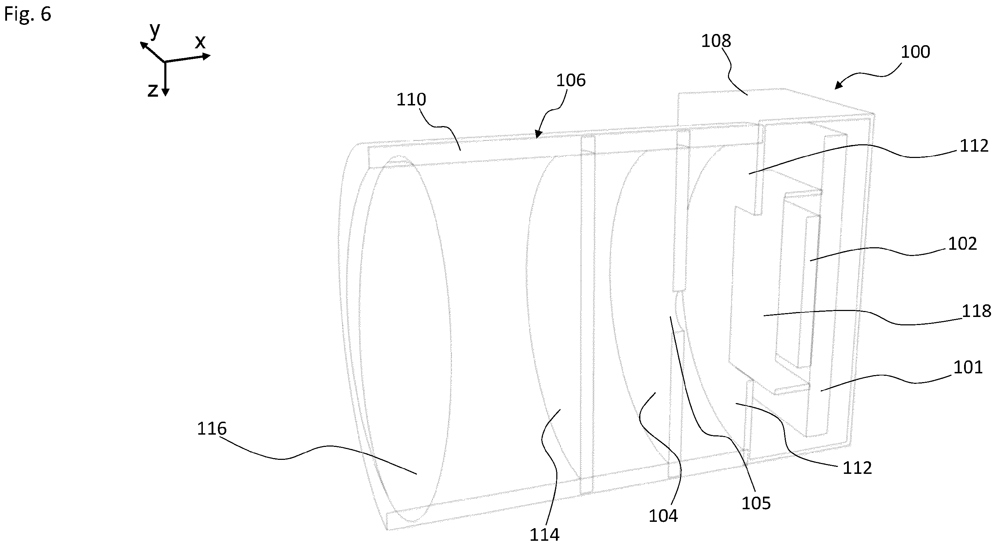

Figur 6 zeigt zudem ein zweites Ausführungsbeispiel der beanspruchten Messvorrichtung 100, welche, basierend auf dem in Figur 5 gezeigten System, insbesondere als Erweiterung des zuvor beschriebenen Minimalaufbaus angesehen werden kann.

Insofern umfasst der Aufbau dieses zweiten Ausführungsbeispiels der Messvorrichtung 100 alle bereits in Figur 5 genannten Elemente, sodass zur Vermeidung etwaiger Redundanzen, für diese Elemente erneut auf die Beschreibung der Figur 5 verwiesen wird.

Zusätzlich zu den oben genannten Elementen besitzt die in Figur 6 dargestellte Vorrichtungskonstruktion jedoch gleichermaßen zumindest ein zusätzliches am Eingang des Eingangsabschnitts 110 positioniertes Strahlenbündelungselement 116, hier dargestellt als am Eingangsabschnitt eingebrachte Sammellinse, welche es zudem ermöglichen kann, die in den Eingangsabschnitt 110 gelangenden Strahlen 210 zu bündeln oder gemäß der vorliegenden Geometrie des Strahlungslimitierungselements 105, in Richtung des Strahlungslimitierungselements 105 abzulenken, sodass die Anzahl an durch die Messvorrichtung 100 aufgenommenen und durch das Sensorelement 102 zu erfassenden Strahlen 210 effektiv erhöht bzw. angepasst werden kann. Darüber hinaus ermöglicht das oben genannte Strahlungsbündelungselement 116 den Vorteil, dass bestehende Orientierungsunterschiede zwischen aufgenommenen Strahlen 210 und der Messvorrichtung 100 effektiv adjustiert werden können, sodass eine genaue Ausrichtung der Messvorrichtung 100 zur Strahlungsquelle 200 zu Beginn der Vermessung effizient entfallen kann. Um diesen Effekt ferner noch effizienter zu gestalten, kann genanntes Strahlungsbündelungselement zudem zumindest zusätzlich um zumindest eine Achse drehbar ausgestaltet sein, wodurch die zuvor beschriebene Anpassung insbesondere auch dynamisch, d.h. während des Vermessungsprozesses, durchgeführt werden kann.

Neben des Strahlungsbündelungselements 116 ist zudem in der gezeigten Ausführungsform zusätzlich ein zwischen dem Strahlungsbündelungselement 116 und dem Strahlungslimitierungselement 105 positioniertes Filterelement 114, sowie ein vor dem Sensorelement 102 vorgeschaltetes zeitabhängiges Verschlusselement 118 eingebracht. Besagtes Filterelement 114 ist dabei im gegebenen Fall insbesondere als Neutraldichtefilterwand ausgebildet und somit in der Lage, die von den in die Messvorrichtung 100 eingehenden Strahlen 210 erzeugte Leuchtstärke zu reduzieren, wodurch eine Übersteuerung der entsprechenden Sensormesswerte effektiv verhindert werden kann. Das zeitabhängige Verschlusselement 118 ist darüber hinaus insbesondere als zeitabhängiger Shutter dargestellt, welcher die von den projizierten Strahlen ausgehende Belichtungszeit des Sensorelements 102 dynamisch einstellen kann, insbesondere durch einstellbares Öffnen und Verschließen des vor dem Sensorelement 102 gelegenen Strahlungsweges.

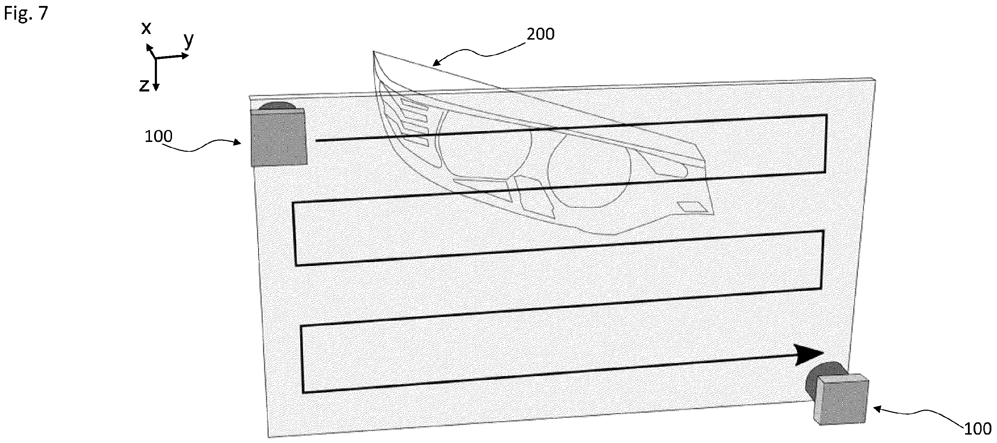

Figur 7 zeigt ferner einen beispielhaften dreidimensionalen Bewegungsablauf der bereits in Fig. 1 und 2 gezeigten Messvorrichtung 100 zur Vermessung des Strahlungsfeldes einer Strahlungsquelle 200, hier erneut dargestellt als Fahrzeugscheinwerfer eines für die Fahrzeugprüfung positionierten Fahrzeugs.

Wie genannt ist es mittels der durch das Strahlungslimitierungselement 105 definierten Strahlenverlauf innerhalb der Messvorrichtung 100 möglich, potentiell jeden von der Strahlungsquelle 200 ausgehenden Strahl 210 einzeln zu erfassen und somit, durch iteratives Verfahren der Messvorrichtung 100 bzw. zumindest der innerhalb des Gehäuses 106 der Messvorrichtung 100 gelegenen Elemente, die gesamte Strahlungsgeometrie des von der Strahlungsquelle 200 ausgehenden Strahlungsfeldes zu identifizieren.

Figur 7 illustriert hierzu ein erstes Beispiel eines zu diesem Zweck von der Messvorrichtung 100 ausgeführten Verfahrweges. Insbesondere kann dieser Verfahrweg dabei mäanderförmig, entlang einer vertikal vor der Strahlungsquelle 200 ausgerichteten Fläche verlaufen, wie in Figur 7 gezeigt, wodurch sichergestellt werden kann, dass das gesamte von der Strahlungsquelle 200 ausgehende Strahlungsfeld effektiv in jeder Raumrichtung erfasst werden kann.

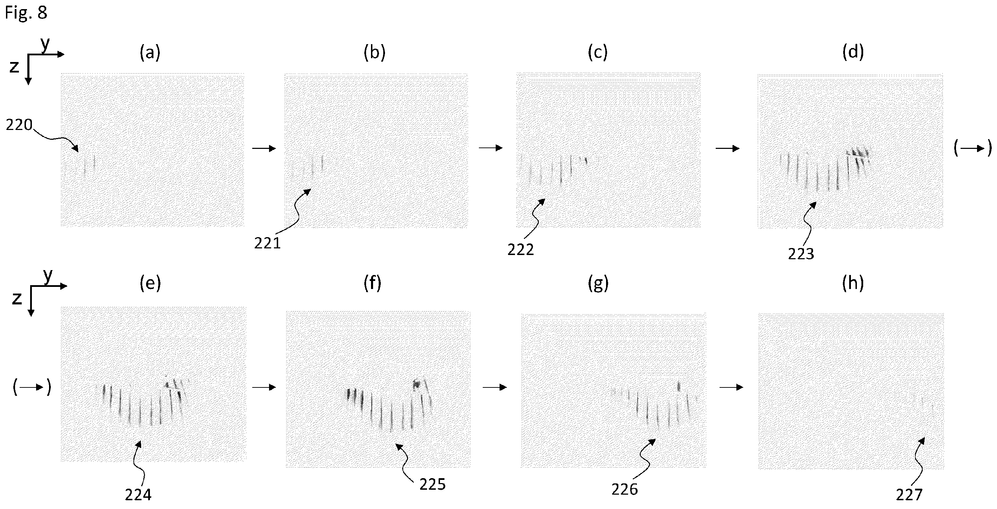

Die Figuren 8a bis 8h zeigen ferner beispielhafte und, zur verbesserten Veranschaulichung, invertierte Intensitätsbilder der von der Strahlungsquelle 200 aus Figur 7 ausgehenden Strahlen 220 - 227, wie sie vorzugsweise von dem Sensorelement 102 an verschiedenen Positionen während eines horizontalen Verfahrens der Messvorrichtung 100 entlang des vordefinierten Verfahrweges der Figur 7 generiert werden könnten. Wie dabei zu sehen ist, ist die originale Form der Strahlungsquelle 200 weiterhin innerhalb der Intensitätsbilder zu erkennen, sodass ein einfacher Abgleich der abgebildeten Objektpunkte der Strahlungsquelle 200 an jedem bestehenden Pixel der Intensitätsbilder durchgeführt werden kann. Entsprechend ist es möglich, mittels Identifizierung der absoluten Position des abgebildeten Objektpunkts eines jeden Intensitätsbildmesswert an der Strahlungsquelle 200, sowie der Identifizierung der absoluten Position des Sensoranteils bzw. -pixels, welcher diesem Intensitätsbildmesswert zugeordnet ist, eine einfache Rekonstruktion des zu diesem Messwert zugehörigen Strahlungsvektor durchzuführen, wie zuvor unter Gleichung (1) gekennzeichnet. Eine letztendliche Rekonstruktion des gesamten Strahlungsfeldes der Strahlungsquelle 200 kann am Ende des Messvorgangs bzw. nach Identifizierung jedes in den Intensitätsbildern eingetragenen Messwerten erfolgen, vorzugsweise indem jeder der durch die Intensitätsbilder identifizierten Strahlungsvektoren addiert und somit eine vierdimensionale Beschreibung des bestehenden Strahlungsfeldes generiert werden kann.

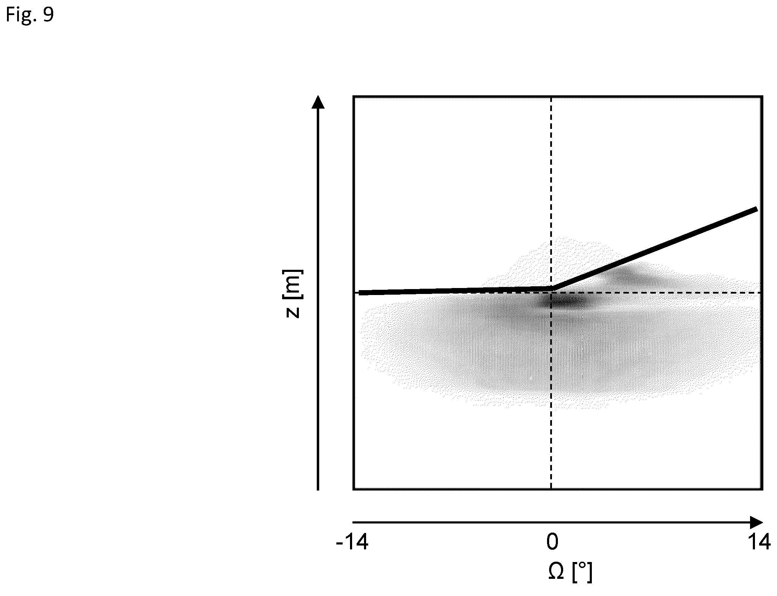

Figur 9 zeigt ein letztendliches Anwendungsbeispiel, in welchem die Erfassung des oben genannten Strahlungsfeldes mittels der dargestellten Messvorrichtung 100 zur Vermessung des Fahrzeugscheinwerfers aus Fig. 7 durchgeführt und nun zur Überprüfung der einzuhaltenden Scheinwerferrichtlinien genutzt wird. Genauer zeigt dabei Figur 9 eine zweidimensionale Mengenverteilung, in welcher die von der vermessenden Strahlungsquelle 200 ausgesendeten Strahlen zunächst auf die für die Fahrzeugscheinwerferprüfung geforderte 10-Meterdistanz projiziert und daraufhin die Höheneigenschaften (Höhe des Strahls an der 10-Metergrenze) in der Y-Achse (notiert als z[m]) sowie der horizontale Neigungswinkel $\Omega$ des jeweiligen Strahls (notiert als $\Omega[°]$) gegenüber der Anzahl an mit diesen Eigenschaften vorliegenden Strahlen geplottet wurde. Die als dick in die Verteilung eingezeichnete Linie stellt zudem die von den jeweiligen Prüfrichtlinien festgelegten maximalen Einstellmaße letztgenannter Strahlungscharakteristika dar.

Entsprechend ermöglicht das durch die vorliegende Messvorrichtung 100 generierte Messverfahren somit ein präzises Identifizieren jedweder durch eine Strahlungsquelle 200 benötigten Strahlungseigenschaften, sodass mittels der vorliegenden Offenbarung nicht nur eine äußerst einfache, präzise und fehlertolerante Messmethodik generiert, sondern, aufgrund der potentiell auf jede Art von elektromagnetischer Strahlung anzuwendenden Mechanik, auch ein vielseitiges Anwendungsgebiet bedient werden kann.

**Patentansprüche**

1. Eine Messvorrichtung (100) zum Ermitteln eines von einer externen Strahlungsquelle (200) ausgehenden vierdimensionalen elektromagnetischen Strahlungsfeldes, umfassend

   - ein Gehäuse (106) mit einem Eingangsabschnitt (110) zur Aufnahme von der externen Strahlungsquelle (200) ausgehenden Strahlung in die Messvorrichtung (100); und
   - ein in dem Gehäuse (106) positionierter Sensorabschnitt (108) zur Erfassung zumindest eines elektromagnetischen Strahls;

   wobei,

   der Eingangsabschnitt zumindest ein Strahlungslimitierungselement (105) umfasst, welches eingerichtet ist, einen Strahl (210) der aufgenommenen Strahlung in den Sensorabschnitt (108) zu projizieren, falls der Strahl (210) einem von einer Mehrzahl von zulässigen Strahlungsvektoren eines vordefinierten Strahlungsvektorsets entspricht, wobei ein Strahlungsvektor durch einen Objektpunkt an der externen Strahlungsquelle (200) und zwei Einstrahlungswinkel definiert ist;
   der Sensorabschnitt (108) zumindest ein Sensorelement (102) umfasst, welches eingerichtet ist, die von dem Strahlungslimitierungselement (105) projizierten Strahlen zu erfassen; und
   die Messvorrichtung (100) eingerichtet ist, das vierdimensionale elektromagnetische Strahlungsfeld basierend auf einer Mehrzahl von Strahlerfassungen bei unterschiedlichen Strahlungsvektorsets zu berechnen.

2. Die Messvorrichtung (100) gemäß Anspruch 1, wobei

   das Sensorelement (102) des Sensorabschnitts (108) eingerichtet ist, die erfassten Strahlen in ein digitales zweidimensionales Intensitätsbild umzuwandeln und in Abhängigkeit zum zugeordneten Strahlungsvektorset zu speichern; und
   die Messvorrichtung (100) eingerichtet ist, die Einträge einer Mehrzahl an gespeicherten zweidimensionalen Intensitätsbildern verschiedener Strahlungsvektorsets zu identifizieren und die projizierten Strahlungsvektoren, basierend auf den Einträgen der Intensitätsbilder, zur Berechnung des vierdimensionalen elektromagnetischen Strahlungsfeldes zu rekonstruieren.

3. Die Messvorrichtung (100) gemäß Anspruch 1 oder 2, wobei
   das Strahlungslimitierungselement (105) eingerichtet ist, das zu nutzende Strahlungsvektorset automatisiert auszuwählen, und derart einzustellen, dass vorzugsweise nur ein Strahl der projizierten Strahlen auf eine Stelle des Sensorelements (102) auftrifft.

4. Die Messvorrichtung (100) gemäß zumindest einem der vorhergehenden Ansprüche, wobei
   das Strahlungslimitierungselement (105) eingerichtet ist, das zu nutzende Strahlungsvektorsets abhängig von einer absoluten Position des Strahlungslimitierungselements (105) und des Sensorelements (102) zu definieren.

5. Die Messvorrichtung gemäß Anspruch 4, wobei
   die Messvorrichtung (100) oder zumindest das Strahlungslimitierungselement (105) und das Sensorelement (102) verfahrbar ausgestaltet sind; und
   die Messvorrichtung (100) oder zumindest das Strahlungslimitierungselement (105) und das Sensorelement (102) zur Änderung des Strahlungsvektorsets eingerichtet sind, zumindest von einer ersten Verfahrposition (S1) zu einer zweiten Verfahrposition (S2) zu verfahren.

6. Die Messvorrichtung (100) gemäß Anspruch 4 oder 5, wobei

   die Messvorrichtung (100) oder zumindest das Strahlungslimitierungselement (105) und das Sensorelement (102) eingerichtet sind, zur Erfassung der projizierten Strahlen bei unterschiedlichen Strahlenvektorsets, entlang eines vordefinierten Vorrichtungsverfahrweges zu verfahren, wobei der Vorrichtungsverfahrweg bevorzugt entlang einer Vertikalebene definiert ist, welche durch die Strahlung der externen Strahlungsquelle (200) durchdrungen wird; und

das Sensorelement (108) eingerichtet ist, während des Verfahrens entlang des Vorrichtungsverfahrweges, kontinuierlich und/oder sequenziell die projizierten Strahlen des Strahlungslimitierungselements (105) zu erfassen.

7. Die Messvorrichtung (100) gemäß zumindest Anspruch 2, wobei

die Messvorrichtung (100) eingerichtet ist, zur Rekonstruktion eines Strahlungsvektors, eine absolute Position der Stelle des Sensorelements (102), welcher dem Eintrag des gespeicherten Intensitätsbildes entspricht, und eine absolute Position des Objektpunktes der externen Strahlungsquelle (200), welcher an dem Eintrag des Intensitätsbildes abgebildet wird, zu entnehmen und;

den Strahlungsvektor durch Subtraktion der Koordinaten der absoluten Position der Stelle des Sensorelements (102) und der Koordinaten der absoluten Position des Objektpunktes zu bilden.

8. Die Messvorrichtung (100) gemäß zumindest einem der vorhergehenden Ansprüche, wobei

der Eingangsabschnitt (110) ferner ein Filterelement (114) zum Einstellen der Intensität der vom Strahlungslimitierungselement (105) projizierten Strahlen; und

ein zeitabhängiges Verschlusselement (118), welches dazu eingerichtet ist, die Belichtungszeit des Sensorelements (102) durch die projizierten Strahlen zu definieren, umfasst.

9. Die Messvorrichtung (100) gemäß zumindest einem der vorhergehenden Ansprüche, wobei der Eingangsabschnitt (110) ein Strahlungsbündelungselement (116) vor dem Strahlungslimitierungselement (105) umfasst, welches eingerichtet ist, zumindest den Einfallswinkel der vom Eingangsabschnitt (110) aufgenommenen Strahlung der externen Strahlungsquelle (200) zu variieren und/oder die Strahlung zum Strahlungslimitierungselement (105) zu fokussieren.

10. Die Messvorrichtung (100) gemäß zumindest einem der vorhergehenden Ansprüche, wobei

das Sensorelement (102) ein Punktsensor, ein Zeilensensor oder ein Flächensensor ist; und

das Sensorelement (102), zur Erfassung der projizierten Strahlen des Strahlungslimitierungselements (105), unabhängig von dem Strahlungslimitierungselement (105), entlang zumindest einer Fläche innerhalb des Sensorabschnitts (108) verfahrbar ausgestaltet ist.

11. Die Messvorrichtung (100) gemäß Anspruch 4 bis 6, wobei die Messvorrichtung (100), zum Verfahren der Messvorrichtung (100), ein am Gehäuse (106) kontaktierbaren Manipulator, vorzugsweise ein Roboterarm-System, umfasst, welcher eingerichtet ist, durch Bewegen zumindest eines Aktuators, die Messvorrichtung (100) in zumindest zwei Raumrichtungen zu verfahren und vorzugsweise zwei Raumrichtungen zu verschwenken.

12. System zur Ermittlung eines von einer externen Strahlungsquelle (200) ausgehenden vierdimensionalen elektromagnetischen Strahlungsfeldes, umfassend,

- zumindest eine Messvorrichtung (100) gemäß Anspruch 1, und
- zumindest eine externe Strahlungsquelle (200),

wobei die zumindest eine Messvorrichtung (100) in einer vordefinierten Entfernung von der zumindest einen externen Strahlungsquelle (200) beabstandet ist.

13. Verfahren zur Ermittlung eines von einer externen Strahlungsquelle (200) ausgehenden vierdimensionalen elektromagnetischen Strahlungsfeldes mittels einer Messvorrichtung (100), wobei die Messvorrichtung (100) zumindest ein Gehäuse (106) mit einem Eingangsabschnitt (110) zur Aufnahme von von der externen Strahlungsquelle ausgehenden Strahlung in die Messvorrichtung (100) und ein in dem Gehäuse (106) positionierten Sensorabschnitt (102) zur Erfassung zumindest eines elektromagnetischen Strahls (210) umfasst, wobei die Methode folgende Schritte umfasst:

- Aufnehmen von Strahlung der externen Strahlungsquelle (200) an dem Eingangsabschnitt (110) der Messvorrichtung (100);

- Projizieren eines Strahls der von der externen Strahlungsquelle (200) ausgehenden Strahlung, mittels eines Strahlungslimitierungselements (105) in dem Eingangsabschnitt (110), in den Sensorabschnitt (108), falls der Strahl einem von einer Mehrzahl von zulässigen Strahlungsvektoren eines vordefinierten Strahlungsvektorsets entspricht, wobei ein Strahlungsvektor durch einen Objektpunkt an der externen Strahlungsquelle (200) und zwei Einstrahlungswinkel definiert ist;
- Erfassen der durch das Strahlungslimitierungselement (105) projizierten Strahlen, mittels eines Sensorelements (102) in dem Sensorabschnitt (108) der Messvorrichtung (100); und
- Berechnen des vierdimensionalen elektromagnetischen Strahlungsfeldes basierend auf den erfassten Strahlen bei unterschiedlichen Strahlenvektorsets.

14. Das Verfahren gemäß Anspruch 13 ferner umfassend,

- Umwandeln, mittels des Sensorelements (102), der erfassten Strahlen in ein digitales zweidimensionales Intensitätsbild;
- Generieren und Speichern einer Mehrzahl von umgewandelten Intensitätsbildern in Abhängigkeit zum genutzten Vektorset; und
- Berechnen des vierdimensionalen Strahlungsfeldes der externen Strahlungsquelle (200) durch Identifizieren der Einträge jedes gespeicherten Intensitätsbildes und Rekonstruieren der ein oder mehreren Strahlungsvektoren, die einem Eintrag entsprechen.

15. Das Verfahren gemäß Anspruch 13 oder 14 ferner umfassend,

- Änderung des zu nutzenden Strahlungsvektorsets durch Verfahren der Messvorrichtung (100) oder zumindest des Strahlungslimitierungselements (105) und des Sensorelements (102);
- Generieren der Mehrzahl von Intensitätsbildern durch kontinuierliches oder sequenzielles Erfassen und Umwandeln der projizierten Strahlen, mittels des Sensorelements (102), während des Verfahrens der Messvorrichtung (100) oder zumindest des Strahlungslimitierungselements (105) und des Sensorelements (102).

Fig. 1

Fig. 2

Fig. 3

Fig. 4a

Fig. 4b

Fig. 5

EP 4 697 000 A1

Fig. 6

Fig. 7

200

100

100

x
y
z

Fig. 8

(a)  (b)  (c)  (d)

(e)  (f)  (g)  (h)

220  221  222  223  224  225  226  227

Fig. 9

EP 4 697 000 A1

Europäisches
Patentamt

European
Patent Office

Office européen
des brevets

# EUROPÄISCHER RECHERCHENBERICHT

**Nummer der Anmeldung**

EP 25 19 4028

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | Chr. Schwanengel: "Gegenüberstellung von Messtechniken zur Messung von Lichtstärkeverteilungen und Lichstärkeverteilungsausschnitten", , 2. August 2010 (2010-08-02), XP055542913, New York Gefunden im Internet: URL:https://www.technoteam.de/e6009/e6311/e5983/pb_download5985/LVK_Messtechniken_ger.pdf [gefunden am 2019-01-16] * Zusammenfassung; Abbildungen 1.12,2.11,2.12,2.13 * * Seite 2, Absatz 1 * * Seite 10, Absatz 2 - Seite 11, Absatz 3 * * Seite 24, Absatz 2 * ----- | 1-15 | INV. G01M11/06 G01J1/02 G01J1/04 G01J1/42 |
| X  A | EP 3 940 356 A1 (TECHNOTEAM HOLDING GMBH [DE]) 19. Januar 2022 (2022-01-19) * Abbildungen 2,6 * * Absätze [0001], [0002], [0093] - [0096], [0105] - [0107], [0113] - [0126] * ----- -/-- | 1,13  2-12,14, 15 | **RECHERCHIERTE SACHGEBIETE (IPC)** G01M G01J |

Der vorliegende Recherchenbericht wurde für alle Patentansprüche erstellt

| Recherchenort | Abschlußdatum der Recherche | Prüfer |
|---|---|---|
| München | 10. Dezember 2025 | Gangl, Martin |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
..................................................................................................
& : Mitglied der gleichen Patentfamilie, übereinstimmendes
Dokument

EPO FORM 1503 03.82 (P04C03)

Seite 1 von 2

Europäisches
Patentamt

European
Patent Office

Office européen
des brevets

**EUROPÄISCHER RECHERCHENBERICHT**

Nummer der Anmeldung

EP 25 19 4028

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | LINDEMANN M ET AL: "Robot goniophotometry at PTB", METROLOGIA, INSTITUTE OF PHYSICS PUBLISHING, BRISTOL, GB, Bd. 52, Nr. 2, 5. Februar 2015 (2015-02-05), Seiten 167-194, XP020282040, ISSN: 0026-1394, DOI: 10.1088/0026-1394/52/2/167 [gefunden am 2015-02-05] * Zusammenfassung; Abbildungen 1,9 * * Seite 180, rechte Spalte, Absatz 2 - Seite 181, linke Spalte, Absatz 4 * ----- | 1-15 | |
| A | DE 10 2015 201093 A1 (LMT LICHTMESSTECHNIK GMBH BERLIN [DE]) 28. Juli 2016 (2016-07-28) * Abbildung 7 * * Absätze [0072] - [0080] * ----- | 1-15 | |
| A | JP S62 80788 A (OMRON TATEISI ELECTRONICS CO) 14. April 1987 (1987-04-14) * Zusammenfassung; Abbildungen 1-5 * * Seite 528 - Seite 530 * ----- | 1-15 | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| München | 10. Dezember 2025 | Gangl, Martin |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 25 19 4028

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-12-2025

| Im Recherchenbericht angeführtes Patentdokument | Datum der Veröffentlichung | Mitglied(er) der Patentfamilie | Datum der Veröffentlichung |
|---|---|---|---|
| EP 3940356 A1 | 19-01-2022 | CN 113945366 A | 18-01-2022 |
| | | DE 102020208992 A1 | 20-01-2022 |
| | | EP 3940356 A1 | 19-01-2022 |
| | | KR 20220010457 A | 25-01-2022 |
| | | TW 202204857 A | 01-02-2022 |
| | | US 2022018709 A1 | 20-01-2022 |
| DE 102015201093 A1 | 28-07-2016 | CN 107209056 A | 26-09-2017 |
| | | DE 102015201093 A1 | 28-07-2016 |
| | | EP 3167260 A1 | 17-05-2017 |
| | | JP 6787902 B2 | 18-11-2020 |
| | | JP 2018506716 A | 08-03-2018 |
| | | KR 20170103833 A | 13-09-2017 |
| | | PL 3167260 T3 | 10-01-2022 |
| | | US 2018003553 A1 | 04-01-2018 |
| | | WO 2016116300 A1 | 28-07-2016 |
| JP S6280788 A | 14-04-1987 | KEINE | |

Für nähere Einzelheiten zu diesem Anhang : siehe Amtsblatt des Europäischen Patentamts, Nr.12/82

EPO FORM P0461

27

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013017206 A1